# EUROPEAN PATENT APPLICATION

(11) **EP 0 987 891 A2**
(43) Date of publication of application: **22.03.2000**
(21) Application number: 99307255.2
(22) Date of filing: 14.09.1999
(51) Int. Cl.: H04N 5/765

(54) **Timer-controlled information processing method and apparatus**

(30) Priority: 16.09.1998 JP 26151998; 14.04.1999 JP 10641199
(71) Applicant: SONY CORPORATION, Tokyo (JP)
(72) Inventor: Kawamura, Harumi, c/o Sony Corporation, Tokyo (JP); Horiguchi, Mari, c/o Sony Corporation, Tokyo (JP); Yamamoto, Kazuo, c/o Sony Corporation, Tokyo (JP); Masahiko, Sato, c/o Sony Corporation, Tokyo (JP)
(74) Representative: Harris, Ian Richard

(57) **Abstract**

A controller of an IRD is operated based on the Universal Time Code UTC as a reference time. When reservation information using a VCR sub-unit of a DVCR is input, the controller reads the offset time of the DVCR relative to the UTC stored in a Bulletin Board Subunit (BBS) of the DVCR. By utilizing the offset time, the time at which the VCR sub-unit is used is converted into the local time used by the DVCR. The converted time is then written into the BBS of the DVCR. With this arrangement, a target can be precisely controlled even when the UTC is used as a reference time.

## Description

### BACKGROUND OF THE INVENTION

### 1. Field of the Invention

The present invention generally relates to information processing apparatuses, information processing methods, and recording media. More particularly, the invention relates to an information processing apparatus for reliably performing reservation processing for sub-units connected to the information processing apparatus via an Institute of Electrical and Electronic Engineers (IEEE)-1394 serial data bus. The invention also pertains to an information processing method used in the above type of information processing apparatus and to a recording medium implementing this method.

### 2. Description of the Related Art

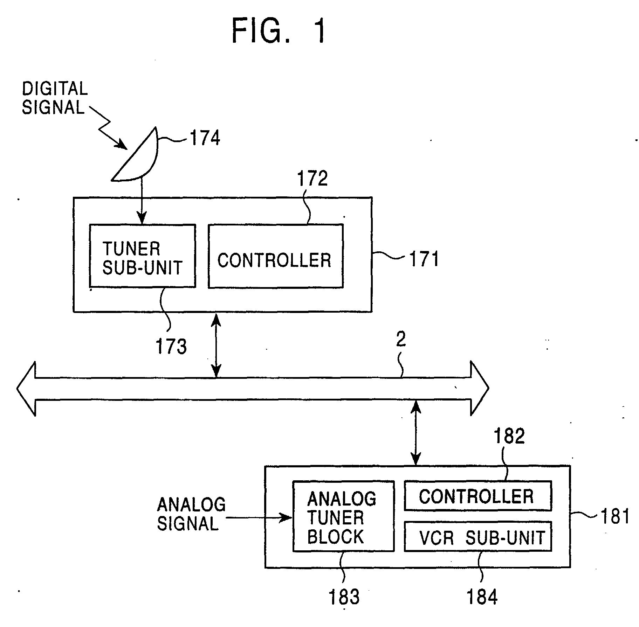

Audio/visual (AV) machines that can transmit information to each other via a network using an IEEE-1394 serial data bus are being developed. In this network, it is possible to control the AV machines connected to the network by using a predetermined command (AV/C Command Transaction Set). For example, a video picture received by an Integrated Receiver Decoder (IRD) 171 for receiving digital satellite broadcasts can be recorded, as shown in Fig. 1, on a Digital Video Cassette Recorder (DVCR) 181 connected to the IRD 171 via an IEEE-1394 serial data bus 2 (hereinafter simply referred to as the "bus 2"). Additionally, what is called "recording reservations" can be made by using the IRD 171 and the DVCR 181.

According to the recording reservation processing, a controller 172 of the IRD 171 controls the IRD 171 and the DVRC 181. More specifically, the recording-reservation settings (channel, recording start time, etc.) are made on the IRD 171, and when the recording start time is reached, the controller 172 of the IRD 171 controls a tuner sub-unit 173 to select the reserved (set) channel and to output a received video signal to the DVCR 181 via the bus 2. Simultaneously, the controller 172 transmits a recording start command to a VCR sub-unit 184 of the DVCR 181 via the bus 2. In response to the recording start command transmitted from the controller 172, the VCR sub-unit 184 of the DVCR 181 records the video signal supplied from the tuner sub-unit 173 on magnetic tape (not shown).

Generally, the reservation start time is set by local time. The reason is as follows. In indicating the reservation schedule by target units controlled by the controller, the reservation schedule can be conveniently indicated by local time if it is set by local time.

In the future, however, there may be some units that designate time by Universal Time Code (UTC) rather than by local time. The UTC is a global time and is indicated by hours, minutes, and seconds. By using the UTC, however, the user is unable to readily determine what the local time is from the UTC, thereby decreasing the ease of operation.

### SUMMARY OF THE INVENTION

Particular and preferred aspects of the invention are set out in the accompanying independent and dependent claims. Features of the dependent claims may be combined with those of the independent claims as appropriate and in combinations other than those explicitly set out in the claims.

Accordingly, in view of the above background, it is an object of the present invention to maintain the ease of operation even when AV machines are operated based on the UTC.

In order to achieve the above object, according to one aspect of the present invention, there is provided an information processing apparatus which is operated based on a second reference time and uses a target operated based on a first reference time via a network. The information processing apparatus includes a first acquisition unit for acquiring a time represented by the second reference time at which the target is to be used. A second acquisition unit acquires information concerning the first reference time from the target. A conversion unit converts the time represented by the second reference time acquired by the first acquisition unit into a time represented by the first reference time at which the target is to be used according to the information concerning the first reference time acquired by the second acquisition unit.

The aforementioned information processing apparatus may further include a registration unit for registering the time converted by the conversion unit in the target.

The second acquisition unit may acquire, as the information concerning the first reference time, information concerning a difference of the first reference time from a third reference time which is shared between the information processing apparatus and the target.

The second acquisition unit may further acquire information concerning a polarity of the third reference time as the information concerning the first reference time.

The second acquisition unit may acquire a code representing a country in which the target is located as the information concerning the first reference time.

The time at which the target is to be used may include a start time at which the use of the target is started.

According to another aspect of the present invention, there is provided an information processing method for use in an information processing apparatus which is operated based on a second reference time and uses a target operated based on a first reference time via a network. The information processing method includes a first acquisition step of acquiring a time represented by the second reference time at which the target is to be used, a second acquisition step of acquiring information concerning the first reference time from the target, and a conversion step of converting the time represented by the second reference time acquired by processing of the first acquisition step into a time represented by the first reference time at which the target is to be used according to the information concerning the first reference time acquired by processing of the second acquisition step.

According to still another aspect of the present invention, there is provided, for example on a recording or other carrier medium, an information processing program executable by a computer, the information processing program for use in an information processing apparatus which is operated based on a second reference time and uses a target operated based on a first reference time via a network. The information processing program includes a first acquisition step of acquiring a time represented by the second reference time at which the target is to be used, a second acquisition step of acquiring information concerning the first reference time from the target, and a conversion step of converting the time represented by the second reference time acquired by processing of the first acquisition step into a time represented by the first reference time at which the target is to be used according to the information concerning the first reference time acquired by processing of the second acquisition step.

According to a further aspect of the present invention, there is provided an information processing apparatus which is operated based on a second reference time and is used by an external information processing apparatus operated based on a first reference time via a network. The information processing apparatus includes a first storage unit for storing an event which is started at a predetermined time. A second storage unit stores a start time of the event. A third storage unit stores information concerning the second reference time. An output unit outputs the information concerning the second reference time stored in the third storage unit to the external information processing apparatus in response to a request from the external information processing apparatus.

The third storage unit may store, as the information concerning the second reference time, information concerning a difference of the second reference time from a third reference time which is shared between the information processing apparatus and the external information processing apparatus.

The third storage unit may further store information concerning a polarity of the third reference time as the information concerning the second reference time.

The third storage unit may further store a code representing a country in which the information processing apparatus is located as the information concerning the second reference time.

According to a yet further aspect of the present invention, there is provided an information processing method for use in an information processing apparatus which is operated based on a second reference time and is used by an external information processing apparatus operated based on a first reference time via a network. The information processing method includes a first storage control step of controlling storage of an event which is started at a predetermined time, a second storage control step of controlling storage of a start time of the event, a third storage control step of controlling storage of information concerning the second reference time, and an output step of outputting the information concerning the second reference time stored by processing of the third storage control step to the external information processing apparatus in response to a request from the external information processing apparatus.

According to a further aspect of the present invention, there is provided, for example on a recording or other carrier medium, an information processing program executable by a computer, the information processing program for use in an information processing apparatus which is operated based on a second reference time and is used by an external information processing apparatus operated based on a first reference time via a network. The information processing program includes a first storage control step of controlling storage of an event which is started at a predetermined time, a second storage control step of controlling storage of a start time of the event, a third storage control step of controlling storage of information concerning the second reference time, and an output step of outputting the information concerning the second reference time stored by processing of the third storage control step to the external information processing apparatus in response to a request from the external information processing apparatus.

According to a further aspect of the present invention, there is provided an information processing apparatus for transmitting and receiving data via a network. The information processing apparatus includes a storage unit for storing events to be processed. An execution unit executes the events stored in the storage unit. A time designating unit designates a time at which each of the events is to be executed. A validity designating unit designates a validity of the events stored in the storage unit.

The validity designating unit may designate the validity of all the events stored in the storage unit. Alternatively, the validity designating unit may designate the validities of the individual events stored in the storage unit.

According to a further aspect of the present invention, there is provided an information processing method for use in an information processing apparatus for transmitting and receiving data via a network. The information processing method includes a storage control step of controlling storage of events to be processed, an execution step of executing the events stored by processing of the storage control step, a time designating step of designating a time at which each of the events is to be executed, and a validity designating step of designating a validity of the events stored by processing of the storage control step.

According to a further aspect of the present invention, there is provided, for example on a recording or other carrier medium, an information processing program executable by a computer and used in transmitting and receiving data via a network. The information processing program includes a storage control step of controlling storage of events to be processed, an execution step of executing the events stored by processing of the storage control step, a time designating step of designating a time at which each of the events is to be executed, and a validity designating step of designating a validity of the events stored by processing of the storage control step.

According to a further aspect of the present invention, there is provided an information processing apparatus for transmitting and receiving data via a network. The information processing apparatus includes a storage unit for storing an event to be processed. An execution unit executes the event stored in the storage unit. A time designating unit designates one of an end time and a standby time of the event by a relative time.

The time designating unit may further designate a valid period of the event stored in the storage unit.

The time designating unit may designate one of the end time and the standby time of the event by a relative time calculated from a start time of the event.

According to a further aspect of the present invention, there is provided an information processing method for use in an information processing apparatus for transmitting and receiving data via a network. The information processing method includes a storage control step of controlling storage of an event to be processed, an execution step of executing the event stored by processing of the storage control step, and a time designating step of designating one of an end time and a standby time of the event by a relative time.

According to a further aspect of the present invention, there is provided, for example on a recording or other carrier medium, an information processing program executable by a computer and used in transmitting and receiving data via a network. The information processing program includes a storage control step of controlling storage of an event to be processed, an execution step of executing the event stored by processing of the storage control step, and a time designating step of designating one of an end time and a standby time of the event by a relative time.

According to a further aspect of the present invention, there is provided an information processing apparatus for transmitting and receiving data via a network. The information processing apparatus includes an event storage unit for storing events to be processed. An execution unit executes the events stored in the event storage unit. A time designating unit designates a time at which each of the events is to be executed. A connection information storage unit stores connection information of each of the events required for transmitting and receiving data via the network.

According to a further aspect of the present invention, there is provided an information processing method for use in an information processing apparatus for transmitting and receiving data via a network. The information processing method includes an event storage control step of controlling storage of events to be processed, an execution step of executing the events stored by processing of the event storage control step, a time designating step of designating a time at which each of the events are to be executed, and a connection information storage step of storing connection information of each of the events required for transmitting and receiving data via said network.

According to a further aspect of the present invention, there is provided, for example on a recording or other carrier medium, an information processing program and used in transmitting and receiving data via a network. The information processing program includes an event storage control step of controlling storage of events to be processed, an execution step of executing the events stored by processing of the event storage control step, a time designating step of designating a time at which each of the events is to be executed, and a connection information storage step of storing connection information of each of the events required for transmitting and receiving data via the network.

According to a further aspect of the present invention, there is provided an information processing apparatus for transmitting and receiving data via a network. The information processing apparatus includes an event storage unit for storing an event to be processed. A time designating unit designates a time at which the event is to be executed. An execution unit executes the event stored in the storage unit according to any one of standby, start, end, suspend, and restart stages of the event.

The aforementioned information processing apparatus may further include a stage-validity designating unit for designating a validity of each of the stages.

According to a further aspect of the present invention, there is provided an information processing method for use in an information processing apparatus for transmitting and receiving data via a network. The information processing method includes an event storage control step of controlling storage of an event to be processed, a time designating step of designating a time at which the event is to be executed, and an execution step of executing the event stored by processing of the event storage control step according to any one of standby, start, end, suspend, and restart stages of the event.

According to a further aspect of the present invention, there is provided, for example on a recording or other carrier medium, an information processing program executable by a computer and used in transmitting and receiving data via a network. The information processing program includes an event storage control step of controlling storage of an event to be processed, a time designating step of designating a time at which the event is to be executed, and an execution step of executing the event stored by processing of the event storage control step according to any one of standby, start, end, suspend, and restart stages of the event.

According to a further aspect of the present invention, there is provided an information processing apparatus for transmitting and receiving data via a network. The information processing apparatus includes an event storage unit stores events to be processed. A time designating unit designates a time at which each of the events is to be executed. An execution unit executes the events stored in the event storage unit. A user information storage unit stores user information of each of the events.

According to a further aspect of the present invention, there is provided an information processing method for use in an information processing apparatus for transmitting and receiving data via a network. The information processing method includes an event storage control step of controlling storage of events to be processed, a time designating step of designating a time at which each of the events is to be executed, an execution step of executing the events stored by processing of the event storage control step, and a user information storage step of storing user information of each of the events.

According to a further aspect of the present invention, there is provided, for example on a recording or other carrier medium, an information processing program executable by a computer and used in transmitting and receiving data via a network. The information processing program includes an event storage control step of controlling storage of events to be processed, a time designating step of designating a time at which each of the events is to be executed, an execution step of executing the events stored by processing of the event storage control step, and a user information storage step of storing user information of each of the events.

### BRIEF DESCRIPTION OF THE DRAWINGS

Exemplary embodiments of the invention are described hereinafter, by way of example only, with reference to the accompanying drawings, in which:
Fig. 1 is a block diagram illustrating an example of the configuration of a related network system;
Fig. 2 is a block diagram illustrating the configuration of a network system incorporating an embodiment of the present invention;
Fig. 3 is a block diagram illustrating the configuration of a Bulletin Board Subunit (BBS) 14 shown in Fig. 2;
Fig. 4 is a block diagram illustrating the configuration of a BBS 34 shown in Fig. 2;
Fig. 5 illustrates the model of a Resource Schedule Board (RSB);
Fig. 6 illustrates the format of a Resource Schedule Board (RSB);
Fig. 7 illustrates the format of a list Specific Information field;
Fig. 8 illustrates the format of a Resource Schedule Object;
Fig. 9 is a flow chart illustrating the operation of a controller 11 shown in Fig. 2;
Fig. 10 is a flow chart illustrating the operation of the controller 11 shown in Fig. 2;
Fig. 11 is a flow chart illustrating the operation of the controller 11 shown in Fig. 2;
Fig. 12 illustrates the format of a WRITE OPEN command;
Fig. 13 illustrates the format of a READ command;
Fig. 14 illustrates the format of a CREATE command;
Fig. 15 illustrates the subfunction_1 shown in Fig. 14;
Fig. 16 illustrates the details of the subfunction_1 shown in Fig. 15;
Fig. 17 illustrates the values of the fields shown in Fig. 16;
Fig. 18 illustrates the format of a WRITE DESCRIPTOR command;
Fig. 19 illustrates the format of a CLOSE command;
Fig. 20 a block diagram illustrating the configuration of a network system incorporating another embodiment of the present invention;
Fig. 21 illustrates the directory structure of a SA descriptor;
Fig. 22 illustrates the root schedule action event list;
Fig. 23 illustrates the format of the SA list specific information;
Fig. 24 illustrates the schedule action event list;
Fig. 25 illustrates the schedule action command list;
Fig. 26 illustrates the valid/invalid trigger flag;
Fig. 27 illustrates the user information list;
Figs. 28A, 28B, and 28C illustrate the macro command;
Fig. 29 is a flow chart illustrating the contending-unit search processing executed by the controller 11 shown in Fig. 20;
Fig. 30 is a flow chart illustrating the contending-unit search processing executed by the controller 11 shown in Fig. 20;
Fig. 31 is a flow chart illustrating the contending-unit search processing executed by the controller 11 shown in Fig. 20;
Fig. 32 is a flow chart illustrating the contending-unit search processing executed by the controller 11 shown in Fig. 20;
Fig. 33 is a flow chart illustrating the processing for setting the SA Event ID executed by the controller 11 shown in Fig. 20;
Fig. 34 is a block diagram illustrating the configuration of a network system incorporating still another embodiment of the present invention;
Fig. 35 is a block diagram illustrating the configuration of a network system incorporating a further embodiment of the present invention;
Fig. 36 is a block diagram illustrating the configuration of a network system incorporating a yet further embodiment of the present invention;
Fig. 37 is a block diagram illustrating the configuration of a network system incorporating a further embodiment of the present invention;
Fig. 38 is a block diagram illustrating the configuration of a network system incorporating a further embodiment of the present invention;
Fig. 39 is a block diagram illustrating the configuration of a network system incorporating a further embodiment of the present invention;
Fig. 40 is a flow chart illustrating the operation of the network system shown in Fig. 39; and
Fig. 41 is a block diagram illustrating an example of the configuration of a computer.

### DESCRIPTION OF THE PREFERRED EMBODIMENTS

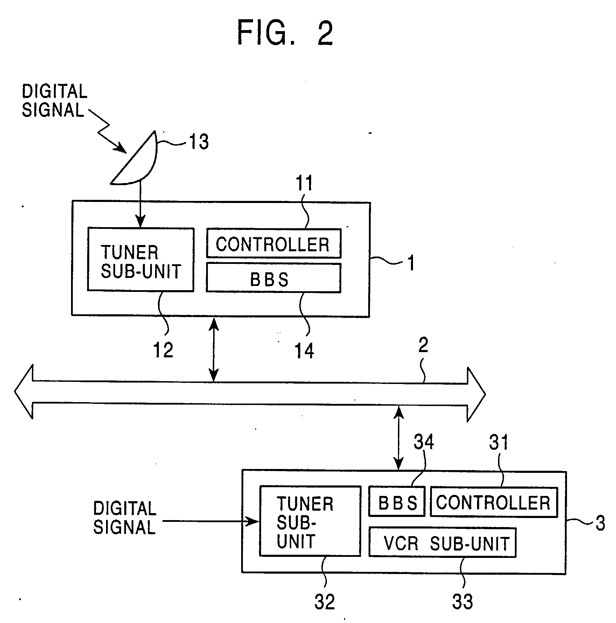

The configuration of a network system incorporating an embodiment of the present invention is described below with reference to Fig. 2. Throughout the specification, the term "system" indicates an entire apparatus formed of a plurality of devices, means, and so on.

This network system is formed of an IRD 1 and a DVCR 3 connected to each other via a bus 2. In addition to the IRD 1 and the DVCR 3, electronic machines provided with an IEEE-1394 terminal, such as personal computers, hard disk drives, compact disc (CD) players, monitors, digital video cameras, and mini disc (MD) (brand name) players, may be connected to the bus 2.

Electronic machines, such as the IRD 1 and the DVCR 3, connected to the bus 2 are referred to as "units". Among the units, it is possible to read and write information from and into the individual units by using a descriptor (Descriptor) defined in the AV/C Digital Interface Command Set General Specification of the AV/C Command Transaction Set (hereinafter referred to as "AV/C General Specification"). The details of AV/C General can be seen in http://cxn02.net.arch.sony.co.jp/Doc/. The functions provided for the units are referred to as the "subunits".

A controller 11 of the IRD 1 controls the entire IRD 1 by receiving a channel-selecting operation or a recording-reservation operation performed by a user. The controller 11 also controls the DVCR 3 by using a predetermined command (AV/C Command Transaction Set). A CS antenna 13 receives digital signals of a digital satellite broadcast transmitted via a communication satellite (not shown) and outputs the digital signals to a tuner sub-unit 12. The tuner sub-unit 12 extracts a predetermined channel signal from the digital signals input from the CS antenna 13 under the control of the controller 11, and outputs the extracted signal to a VCR sub-unit 33 of the DVCR 3 via the bus 2. The controller 11 further searches for information stored in a Bulletin Board Subunit (BBS) 34 of the DVCR 3.

A BBS 14, which serves as a sub-unit of the IRD 1, stores information concerning recording reservations received and determined by the controller 11.

A controller 31 of the DVCR 3 controls the entire DVCR 3 by receiving a reproducing-instruction operation or a recording-reservation operation performed by a user. A tuner sub-unit 32 extracts a predetermined channel signal from the input analog signals under the control of the controller 31 and outputs the extracted signal to the VCR sub-unit 33.

The VCR sub-unit 33 records on magnetic tape (not shown) a video signal input from the tuner sub-unit 32 or a video signal input from the tuner sub-unit 12 of the IRD 1 via the bus 2.

The BBS 34 manages information of recording reservations concerning the DVCR 3.

The tuner sub-unit 12 and the BBS 14 are sub-units of the IRD 1, and the tuner sub-unit 32, the VCR sub-unit 33 and the BBS 34 are sub-units of the DVCR 3.

In this network system, when a recording reservation of a digital satellite broadcast is performed, a user inputs the settings of the recording reservation (channel, recording start time, etc.) into the IRD 1. If the input reservation does not cause double-booking, it is accepted, and the reservation information is written into the BBS 14 of the IRD 1.

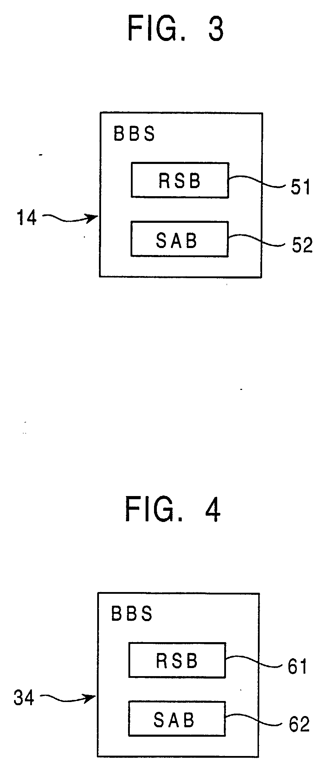

The BBS 14 is formed of, as shown in Fig. 3, a Resource Schedule Board (RSB) 51 and a Scheduled Action Board (SAB) 52. -The SAB 52 stores all the information concerning recording reservations input from the controller 11 of the IRD 1 and from a controller of another unit (for example, the controller 31 of the DVCR 3). That is, the SAB 52 stores all the information for controlling a series of operations of causing the tuner sub-unit 12 of the IRD 1 to receive information at a predetermined time and to record it on the VCR sub-unit 33 of the DVCR 3.

In contrast, the RSB 51 stores only information concerning reservations for the tuner sub-unit 12 of the IRD 1 among all the information concerning recording reservations (including reservations set by other units). Even if the operation of the VCR sub-unit 33 is related to that of the tuner sub-unit 12, the RSB 51 does not store reservation information of the VCR sub-unit 33. The RSB 51 makes the stored information public in response to a request not only from the controller 11 of the same unit, but also from the controller of another unit (for example, the controller 31 of the DVCR 3).

Similarly, the BBS 34 of the DVCR 3 is formed of, as shown in Fig. 4, a RSB 61 and a SAB 62. The SAB 62 stores all the information concerning recording reservations input from the controller 31 of the DVCR 3 and from another controller of another unit (for example, the controller 11 of the IRD 1). In contrast, the RSB 61 stores only information concerning reservations for the VCR sub-unit 33 (or the tuner sub-unit 32) of the DVCR 3 among all the information concerning recording reservations input into the controller 31 of the DVCR 3 and into the controller 11 of the IRD 1. Even if the operation of the tuner sub-unit 12 is related to that of the VCR sub-unit 33 (or the tuner sub-unit 32), the RSB 61 does not store reservation information of the tuner sub-unit 12. The RSB 61 makes the stored information public in response to a request not only from the controller 31 of the same unit, but also from the controller of another unit (for example, the controller 11 of the IRD 1).

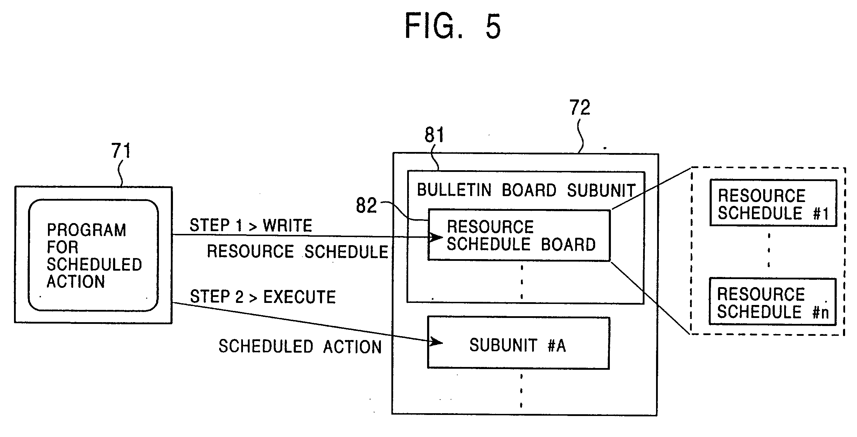

Fig. 5 illustrates a model of the RSB. The unit corresponding to a target device 72 is the DVCR 3 in the example shown in Fig. 2. A sub-unit #A shown in Fig. 5 corresponds to, for example, the VCR sub-unit 33 of the DVCR 3 shown in Fig. 2. An owner device 71 is equivalent to the IRD 1 shown in Fig. 2. A Program for Scheduled Action corresponds to a reservation program registered in the controller 11 shown in Fig. 2.

A RSB 82 (which is equivalent to the RSB 61 shown in Fig. 4) is located within a BBS 81 (which corresponds to the BBS 34 shown in Fig. 4), and is formed of a single root list. The root list is a base list designated by a sub-unit Identifier Descriptor. The sub-unit Identifier Descriptor is a list indicating the outline of all the sub-units. Details of the list structure are specified in AV/C General Specification.

The root list of the RSB 82 is formed of a single or a plurality of Resource Schedule Objects, which represent reservation information to be written into units.

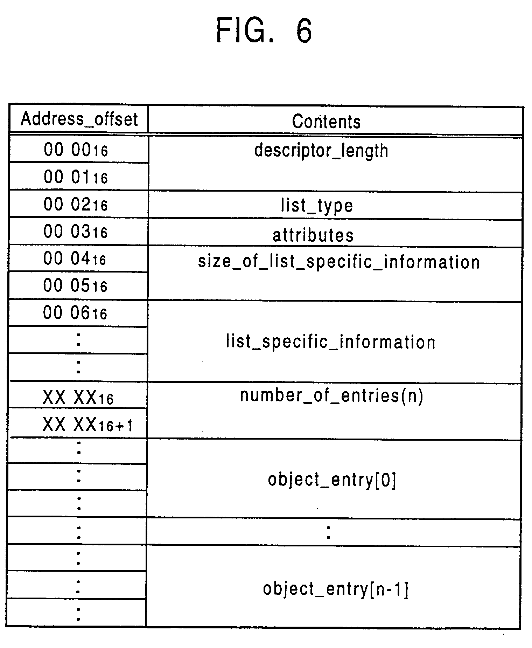

Fig. 6 illustrates the format of the RSB. The descriptor_length indicates the length of the RSB. The list_type indicates whether the RSB is Read Only or Write Enabled. The Read Only list represents that only reading is enabled, and the Write Enabled List indicates that writing, as well as reading, is enabled. The attributes designate a bit flag representing the attributes of all the list structures.

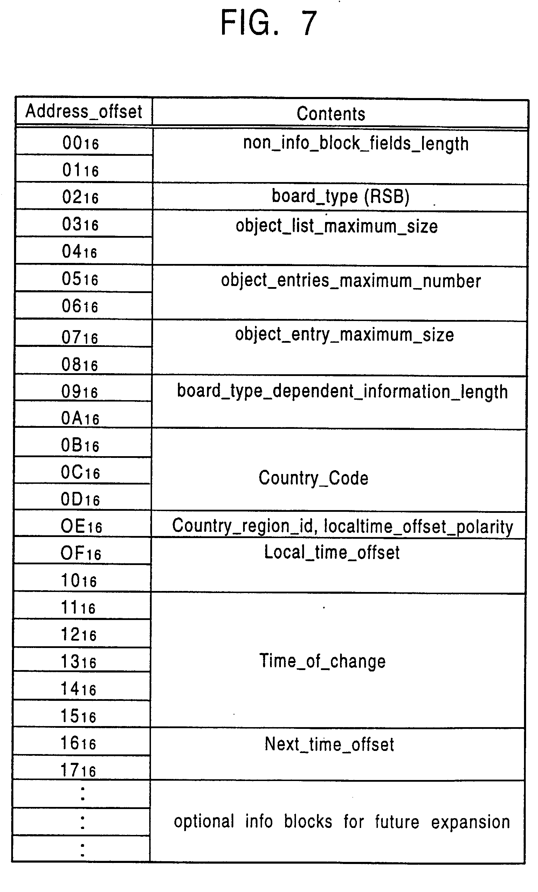

The size_of_list_specific_information indicates the length of the list_specific_information (which will be described later with reference to Fig. 7). The number_of_entries(n) represents the number of object_entries[i] (i = 0, 1, 2, ..., n-1) registered in this RSB. In this example, n object_entries are registered.

Fig. 7 illustrates the format of the list_specific_information.

The non_info_block_fields_length represents the number of bytes of the non info block fields before the Next_time_offset. If the board_type is the Resource Schedule Board, 01₁₆ is set.

The object_list_maximum_size represents the maximum size of the object list. The object_entry_maximum_number indicates the maximum number of object entries in the list. The object_entry_maximum_size indicates the maximum size of each object entry. If there is no limit imposed on the object_list_maximum_size, the object_entry_maximum_number, and the object_entry_maximum_size, 0000₁₆ is set in each field.

The above three fields are significant for the controller to recognize the capacity of the object list or the object entry.

The board_type_dependent_information_length designates the length of the board_type_dependent_information. The board_type_dependent_information indicates information peculiar to the board type. Since this board is a RSB, the Country_Code, the Country_region_id, the localtime_offset_polarity, and the Local_time_offset, the Time_of_change, the Next_time_offset are described in the board_type_dependent_information.

The Country_Code is a 24-bit code which is defined as 3166 by the International Organization for Standardization (ISO) and indicates the country. This code consists of three characters, and each character is an 8-bit code defined by ISO8859-1.

The Country_region_id has six bits and indicates the ID number of a specific zone of the country represented by the Country_Code. If the Country_region_id is set to be 000000, there are no zones having different local times in the designated country. The localtime_offset_polarity is formed of one bit. If the localtime_offset_polarity indicates 0, the local time is a positive value (the local time is ahead of the UTC (generally, the time measured at places eastwards from Greenwich)). If the localtime_offset_polarity designates 1, the local time is a negative value (the local time is behind the UTC (generally, the time measured at places westwards from Greenwich)).

The Local_time_offset designates a difference (offset) of the local time from the UTC and ranges from -12 hours to 12 hours. The Local_time_offset has a total of 16 bits, and more specifically, the four digits of the time, i.e., the unit digit and the tenth digit of the hour and those of the minute, are each indicated by a binary coded-decimal (BCD).

The Time_of_change is a 40-bit field indicating the time and date at which the time is changed due to, for example, the summer time. The Time_of_change is represented by time and date in the modified Julian date (MJD) and the UTC.

The Next_time_offset designates an offset from the UTC of the time after being changed in a predetermined area (designated by the Country_region_id) of a predetermined country (specified by the Country_Code). The Next_time_offset is indicated in a range from -12 hours to 12 hours. The offset has a total of 16 bits and is indicated by four numbers, such as the unit digit and the tenth digit of the hour and those of the minute, each number being represented by a four-bit BCD.

The Next_time_offset is followed by the optional info blocks for future expansion.

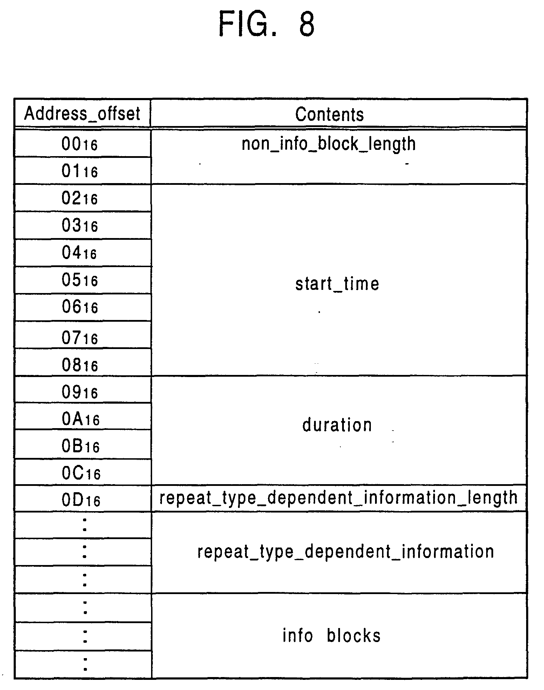

Fig. 8 illustrates the format of the object_entry[i] (i = 0, 1, 2, ..., n-1) of RSB. The non_info_block_length indicates the number of bytes of the non-info block fields before the repeat_type_dependent_information. The start_time represents the second, the minute, the hour, the day, the month, and the year at which the event is started. The year has 16 bits, the four numbers being each represented by a four-bit BCD. The month has eight bits, the two numbers being each represented by a four-bit BCD. The day has eight bits, the two numbers being each indicated by a four-bit BCD. The hour has eight bits, the two numbers being each indicated by a four-bit BCD. The minute has eight bits, the two numbers being each indicated by a four-bit BCD. The second has eight bits, the two numbers being each represented by a four-bit BCD.

The start_time can be easily identified as the BCD. The time is represented by local time.

The duration, which indicates the length of the event, is represented by the hour, the minute, and the second. The hour has a total of 12 bits, the three numbers being each represented by a four-bit BCD. The minute has a total of eight bits, the two numbers being each indicated by a four-bit BCD. The second has a total of eight bits, the two numbers being each represented by a four-bit BCD.

By adding the duration to the start_time, the end time of the event can be indicated. The length of the event is thus represented by the duration without directly indicating the end time. This eliminates the need to modify the end time even when the start_time of the event is changed, thereby simplifying the updating processing.

The repeat_type_dependent_information_length indicates the length of the repeat_type_dependent_information. The repeat_type_dependent_information represents when and how the schedule is repeated. If the Scheduled Action is not repeated, the repeat_type_dependent_information_length indicates 00₁₆.

The content of the repeat_type_dependent_information varies according to the selected repeat type. The repeat type includes the Weekly schedule 00₁₆ and the Interval schedule 10₁₆.

The events to be repeated weekly (Weekly schedule) or at a predetermined interval (Interval schedule) can be recorded, as described above. Accordingly, only a smaller storage capacity is required compared to that required for storing, for example, the absolute time and date every Monday and Wednesday corresponding to the broadcast days.

In the info blocks, the compound_length, the info_block_type, the primary_fields_length, the number_of_subunits, and the subunit_type_and_ID are described. The compound_length indicates the byte length of the info block, except for the length field. The info_block_type is set to be 8900₁₆. The primary_fields_length indicates the number of bytes of the number_of_subunits and the subunit_type_and_ID field.

The number_of_subunits represents the number of subunits used by the posting Device (the device including a controller). The subunit_type_and_ID specifies the subunits to be used by the posting Device.

As discussed above, the start_time and the duration are represented by the fixed lengths at the fixed address. In contrast, the ID information for identifying the subunit and the Posting Device using the subunit is stored as Info blocks at a predetermined address subsequent to the address of the start_time and the duration. With this arrangement, the addition of Posting Devices can be easily handled.

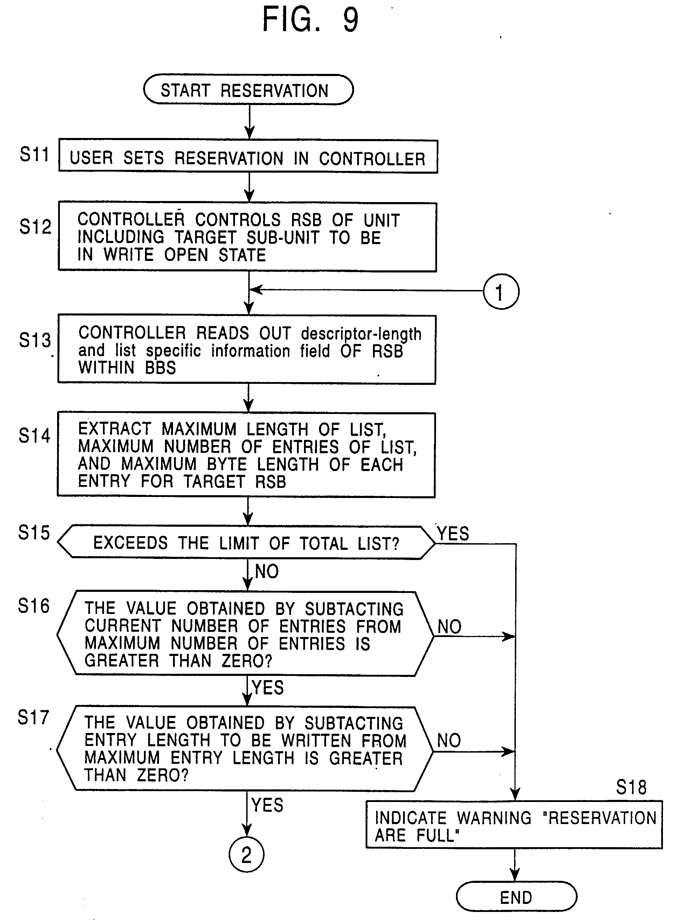

Details of the above-described reservation processing (contending-unit search processing) performed by the system shown in Fig. 2 are discussed below with reference to the flow charts of Figs. 9 through 11.

In step S11, a user sets a reservation in the controller 11 of the IRD 1. For example, a reservation for causing the tuner sub-unit 12 to receive the 48 channel from 20:00 to 21:00 on October 16 and to transfer the received video signal to the VCR sub-unit 33 of the DVCR 3 and record it. Simultaneously, in step S12, the controller 11 controls the RSBs of the units including the target sub-units to be in the WRITE OPEN state. In this embodiment, the target sub-units are the tuner sub-unit 12 of the IRD 1 and the VCR sub-unit 33 of the DVCR 3. Accordingly, the controller 11 first selects, for example, the tuner sub-unit 12 and outputs a WRITE OPEN command so that the RSB 51 of the IRD 1 including the tuner sub-unit 12 reaches the WRITE OPEN state (the write enable state).

In practice, however, the RSB 51 and the controller 11 are in the same unit, i.e., the RSB 51 and the controller 11 are not connected via the bus 2. Accordingly, the controller 11 controls the RSB 51 as if a WRITE OPEN command were supplied to the RSB 51 via the bus 2.

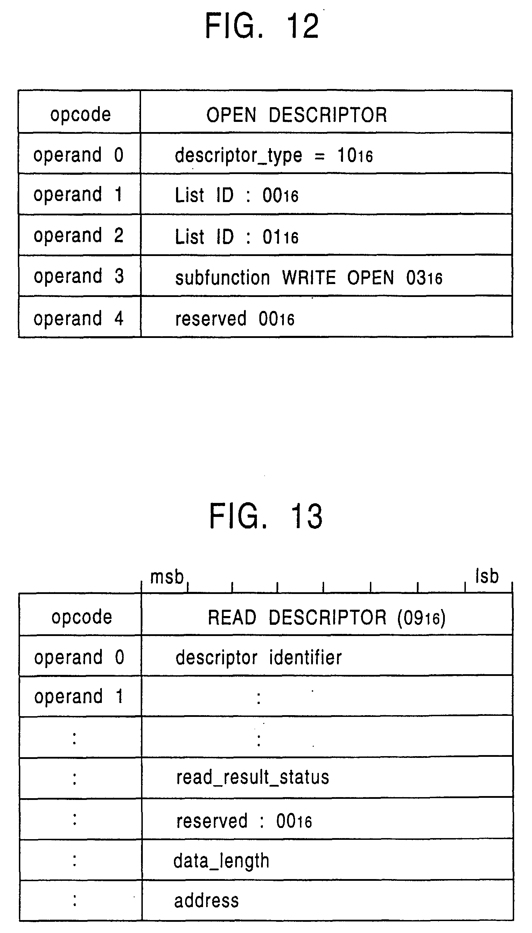

After the RSB 51 of the IRD 1 including the tuner sub-unit 12 has become the WRITE OPEN state, the controller 11 controls the RSB 61 of the DVCR 3 including the remaining target sub-unit, i.e., the VCR sub-unit 33, to be in the WRITE OPEN state. In this case, the controller 11 outputs a WRITE OPEN command having the format shown in Fig. 12 to the RSB 61 (the controller 31) of the DVCR 3 via the bus 2.

The above WRITE OPEN command is one type of OPEN DESCRIPTOR commands used for making access to a predetermined target address space, and has the format shown in Fig. 12. The value 08₁₆, which represents the OPEN DESCRIPTOR, is set in the opcode. The value 10₁₆, which indicates the Object List Descriptor defined by the list ID, is set in operand 0 as the descriptor_type representing the type of the descriptor. In operand 1 and operand 2, list IDs (in this embodiment, 00 and 01) of the RSBs to be accessed (to be in the WRITE OPEN state) are described.

The value 03₁₆, which indicates that descriptors are to be opened to be read or written, is set in operand 3 as subfunction. The value 00 is set in operand 4 as a reserved value.

Referring back to Fig. 9, in step S13, the controller 11 reads out the descriptor_length and the list_specific_information field (Fig. 7) of the RSB 51 within the BBS 14. The reading operation is performed by using, for example, the READ command shown in Fig. 13. In this case, since the controller 11 and the RSB 51 are not connected via the bus 2, as stated above, the above data is directly read from the controller 11 to the RSB 51. When, however, the controller 11 reads out data from the RSB 61 of the DVCR 3, the READ command shown in Fig. 13 is output to the RSB 61 (the controller 31) via the bus 2.

As illustrated in Fig. 13, the value 09₁₆, representing the read descriptor, is set in the opcode, which is the head of the READ command. In the subsequent operand 0, the descriptor identifier for identifying the descriptor to be read is described. In the reading operation in step S13, the descriptor identifier is set by the list ID. More specifically, 00₁₆ through 0D₁₆ of the Address_offset of the write enabled list_specific_information field of the RSB are set.

When the READ command is transmitted, FF is set in the read_result_status. When the READ command is returned from the target as a response, the read result is set. In the data_length, the number of bytes of data to be read from the target is described. When the data_length is set to be 0, all the lists are read. The address at which the reading is started is set in the address. When 00 is set in the address, the reading commences from the head.

Referring back to Fig. 9, in step S14, the controller 11 extracts for the RSB 51 the maximum length of the list (the object_list_maximum_size shown in Fig. 7), the maximum number of entries of the list (the object_entries_maximum_number shown in Fig. 7), and the maximum byte length of each entry (the object_entry_maximum_size shown in Fig. 7).

The controller 11 then determines in step S15 whether data (reservation information) to be recorded on the RSB 51 causes an excess of the maximum length of the list extracted in step S14. If the outcome of step S15 is no, the process proceeds to step S16 in which the controller 11 determines whether the value obtained by subtracting the current number of entries from the maximum number of entries of the list extracted in step S14 is greater than zero, i.e., whether there is any entry left for writing data. If the result of step S16 is yes, the process proceeds to step S17 in which the controller 11 determines whether the value obtained by subtracting the length of the entry of the reservation information to be written from the maximum length of the entry extracted in step S14 is greater than zero, i.e., whether there is any space left for the entry into which data is written.

If any one of the conditions set in steps S15 through S17 is not satisfied, the process proceeds to step S18 in which the controller 11 indicates a warning, such as "reservations are full", to the user. This enables the user to recognize that no more reservations can be made.

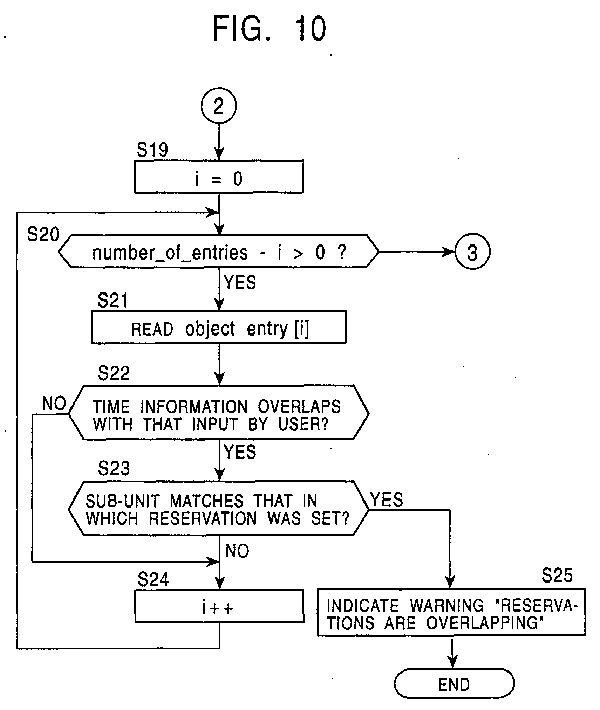

If all the conditions set in steps S15 through S17 are met, the reservation information can be written into the RSB 51, and a determination is further made in steps S19 through S25 of Fig. 10 whether the time of the reservation input by the user overlaps with that of the reservation which has already been accepted, i.e., whether double-booking has occurred.

More specifically, in step S19, a variable i is initialized to zero. It is then determined in step S20 whether the value obtained by subtracting the variable i from the number of entries, i.e., the number_of_entries, recorded on the RSB 51 is greater than zero, i.e., whether all the entries recorded on the RSB 51 have been searched. If the outcome of step S20 is yes, the process proceeds to step S21 in which the controller 11 reads out the object_entry[i] (Fig. 8) (in this case, the object_entry [0]) shown on the RSB 51.

Although the reading operation in step S21 is also performed by using the READ command illustrated in Fig. 13, the descriptor identifier is set by the object position. In the object_entry[i], the time information of the registered reservation (the start_time and the duration shown in Fig. 8) and the ID information of the target sub-unit (the subunit_type_and_ID[0] of the info blocks shown in Fig. 8) are stored, which will be described later.

Then, the controller 11 determines in step S22 whether the time information (the start_time and the duration) input by the user in step S11 overlaps with the time information (the start_time and the duration) read in step S21. If the result of step S22 is yes, the process proceeds to step S23. In step S23, the controller 11 determines whether the sub-unit in which the reservation was set in step S11 (in this case, the tuner sub-unit 12) coincides with the sub-unit read in step S21 (the subunit_type_and_ID). If the outcome of step S23 is yes, the time and the sub-unit read in step S21 match those input by the user. Accordingly, the process proceeds to step S25 in which the controller 11 indicates a warning, such as "reservations are overlapping". As a result, the occurrence of double-booking can be prevented.

If it is found in step S22 that the time information input by the user does not overlap with the time information read in step S21, or if it is found in step S23 that the sub-units determined in steps S11 and S21 do not coincide with each other even if time overlapping has occurred in step S22, there is no possibility of generating double-booking. Accordingly, in step S24, the variable i is incremented by one, and the process returns to step S20. Processing similar to the above-described processing is repeated until it is determined in step S20 that the value obtained by subtracting the variable i from the number_of_entries is not greater than zero. That is, all the object_entries[i] stored in the RSB 51 are searched to determine whether there are any overlapping reservations.

If it is found in step S20 that the value obtained by subtracting the variable i from the number_of_entries is not greater than zero, i.e., that all the object_entries[i] have been searched, the process proceeds to step S26. In step S26, the controller 11 outputs a CREATE command to the RSB 51 and creates an object entry in the RSB 51. In this case, the CREATE command is not actually output, and processing is executed as if the CREATE command were output, as stated above. When the object entry is created in the RSB 61, the CREATE command is output.

The above-described steps S15 through S18 may be executed after it is determined in step S20 that the all the entries have not been completely searched.

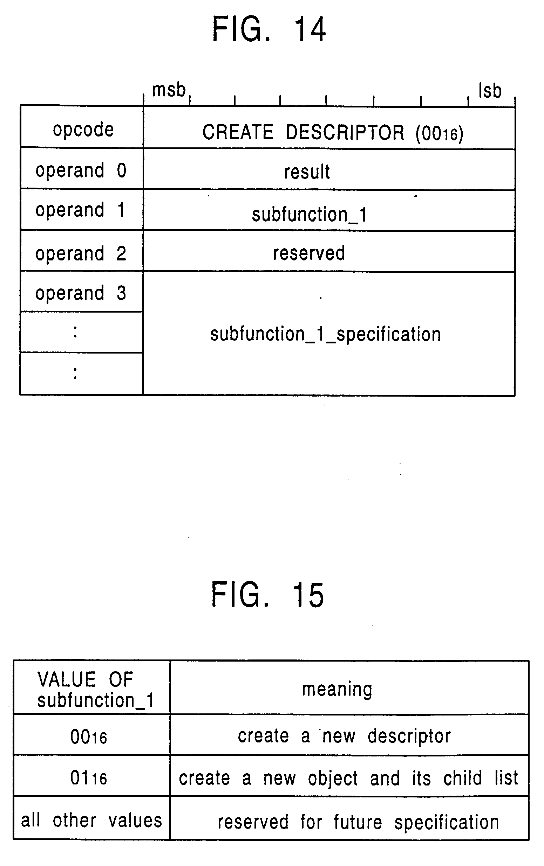

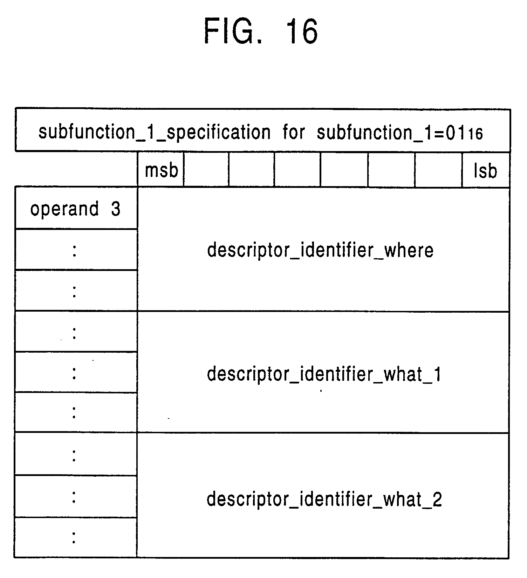

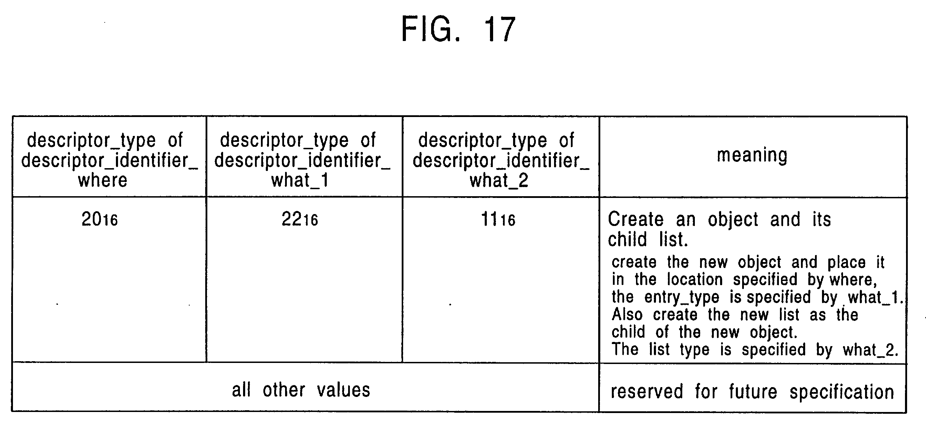

The above-described CREATE command is discussed in detail below with reference to Figs. 14 through 17. Fig. 14 illustrates the format of the AV/C CREATE command. Fig. 15 illustrates the value that can be specified by the subfunction_1 shown in Fig. 14, and in this embodiment, 01 (create a new object and its child list) is used. Fig. 16 illustrates the format of the subfunction_1_specification for subfunction_1 = 01 shown in Fig. 14. Fig. 17 illustrates the values of the individual fields shown in Fig. 16. If the values 20, 22, and 11 are respectively set, as illustrated in Fig. 17, in the fields, i.e., the descriptor_identifier_where, the descriptor_identifier_what_1, and the descriptor_identifier_what_2, of Fig. 16, the meaning is to create a new object and its child list.

Details of the AV/C CREATE command are indicated in IEEE 1394 (see the Internet homepage http://www.1394 TA.org), and the formats used in this embodiment are extracted from the specifications of the IEEE 1394 standards (Enhancement to the AV/C General Specification 3.0 Version 1.0 FC2 and TA Document 1999005 AV/C Bulletin Board Subunit General Specification 1.0 Draft 0.99:149). The information descriptors forming the board (Information List Descriptor) include writable descriptors and readable descriptors, and the list type is used for differentiating the two types.

To write new information into the AV/C descriptor (AV/C Descriptor) from an external source, the following method may be employed as a typical example. The controller issues the above-described CREATE command to the target, and after the target forms a model for writing information, the controller again controls the writing of specific information. More specifically, when information is first written, the controller designates a desired list and issues the AV/C Descriptor CREATE command. Upon receiving this command, the target forms the object within the target based on the model having the data structure specified by the AV/C General Specification. The model having the data structure designated by the AV/C General Specification has a field of the object ID. In the list using the AV/C Descriptor, the object ID is managed by the target, namely, when the object is created, the target adds an ID unique to the object and possesses the function of managing the ID.

The object ID is an ID number for uniquely specifying the object in the list, and the target is required to have the function of preventing the multiple storing of IDs. The BBS merely provides information, and the object IDs are managed by the controller.

When the CREATE command is issued to a sub-unit, inconsistencies may arise. When an object is created, the object ID, which should be managed by the controller, is under the control of the target. After issuing the CREATE command, the controller has to continue the writing control. In this manner, the processing is divided into a plurality of steps. Accordingly, if the controller is accidentally disconnected from the bus while writing information into the BBS, an imperfect object may be created.

To overcome the above-described situation, there is needed a system for specifying the imperfect object and correctly eliminating it. In this embodiment, the writing of information into the BBS is restricted so as to specify imperfect objects.

In creating an object, the target (in this embodiment, the DVCR 3) first assigns temporarily managing numbers (for example, all 0) to a Global Unique ID (GUID) of the object ID. The object ID consists of the GUID and the record ID. The controller then writes information into the object, and if the writing operation is correctly completed, the controller finally overwrites the GUID.

According to the above procedure, if the writing operation has been correctly completed, the presence of objects having the GUID indicating all 0 is impossible. Accordingly, such objects can be specified as imperfect objects which were accidentally created while the writing operation was being performed.

Consequently, the objects which are being written can be uniquely identified. It is also possible to distinguish correctly written objects from imperfect objects and to easily eliminate the imperfect objects (invalid objects). This further makes it possible to effectively utilize a finite memory provided for an electronic apparatus. According to the above method, the objects which are being written can be simply specified by temporarily assigning 0 to the GUID. Software for eliminating imperfect objects can easily be created accordingly.

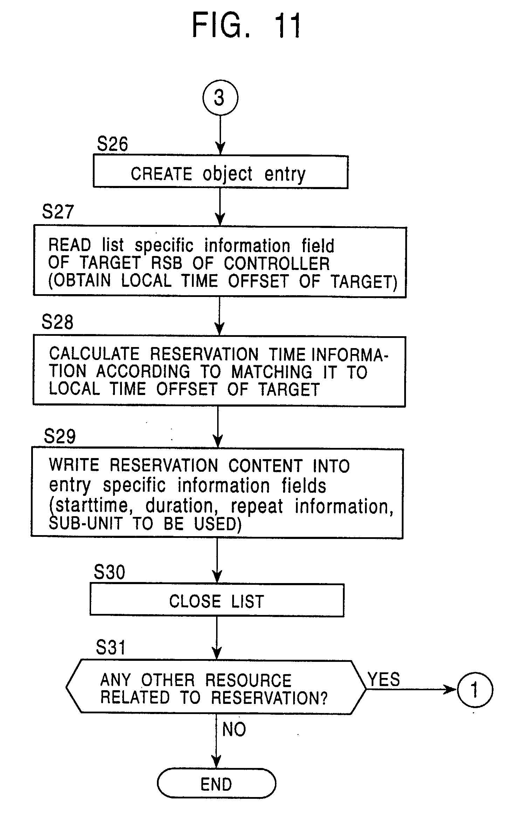

In step S26 of Fig. 11, the INSERT command may be used instead of the CREATE command.

Referring back to Fig. 11, the process proceeds to step S27 in which the controller 11 reads the list specific information field (Fig. 7) of the target RSB 61 of the DVCR 3, thereby obtaining the Local_time_offset of the DVCR 3. Then, in step S28, the controller 11 calculates the time information of the reservation of the VCR sub-unit 33 input by the user in step S11 according to the Local_time_offset of the DVCR 3 obtained in step S27. More specifically, although the controller 11 operates based on the UTC (is capable of acquiring the UTC), the user inputs the time at which the VCR sub-unit 33 of the DVCR 3 is used based on the local time of the IRD 1 rather than the DVCR 3. The controller 11 then converts the time input by the user (relative to the local time of the IRD 1) into the UTC and further obtains the time corresponding to the Local_time_offset from the UTC, finally calculating the time based on the local time of the DVCR 3.

In step S29, the controller 11 writes the reservation content, such as the start_time, the duration, and the repeat_information, the subunit to be used (the subunit_type_and_ID) into the entry_specific_information fields (Fig. 8) of the RSB 51. The start_time is recorded based on the local time of the DVCR 3 calculated in step S28.

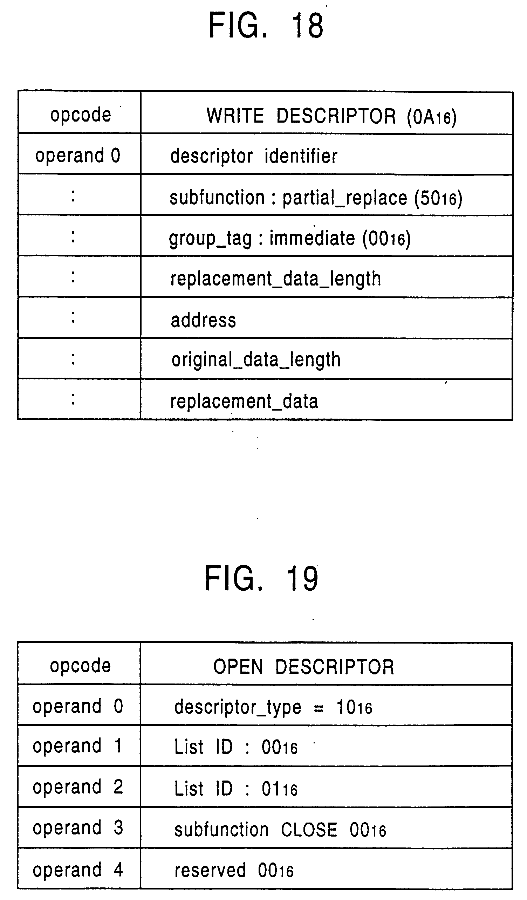

Fig. 18 illustrates the WRITE DESCRIPTOR command output from the controller 11 when step S29 is executed. As stated above, since the controller 11 and the RSB 51 are not connected via the bus 2, the reservation information of the tuner sub-unit 12 is directly written into the RSB 51 without issuing the WRITE DESCRIPTOR command. Conversely, when the controller 11 writes the reservation information of the VCR sub-unit 33 into the RSB 61, the WRITE DESCRIPTOR command is issued.

In the opcode, which is the head of the WRITE DESCRIPTOR command, the value 0A₁₆, which indicates the WRITE DESCRIPTOR, is set. In operand 0, the descriptor identifier for identifying the descriptor of the information to be written is set by the object position.

Thereafter, the value 50₁₆, which represents the partial_replace, is set as the subfunction, thereby executing partial insert or partial delete. In performing insert, a new descriptor is inserted immediately before the descriptor defined by the operand specified by the descriptor_identifier. In performing delete, the descriptor defined by the descriptor_identifier is deleted.

The group_tag is used for updating the data which cannot be divided when being written into the descriptor. In this embodiment, the value 00₁₆ (immediate), which indicates that the data is immediately written into the descriptor, is set. The replacement_data_length represents the number of bytes of the operand, i.e., the length of data to be written. The address indicates the position at which processing is executed. If the replacement_data_length indicates 0, partial delete is performed, in which case, the operand of the replacement_data does not exist. In this case, the original_data_length is greater than 0, and indicates the number of bytes to be deleted. If the original_data_length is 0, partial insert is executed, in which case, the replacement_data_length is greater than 0, and indicates the number of bytes to be inserted.

Referring back to Fig. 11, the process proceeds to step S30 in which the controller 11 closes the list, i.e., the RSB 51. Simultaneously, the controller 11 outputs the CLOSE command shown in Fig. 19 to the RSB 51. As stated above, the controller 11 directly closes the RSB 51 without issuing the CLOSE command since the controller 11 and the RSB 51 are not connected via the bus 2. When the controller 11 closes the RSB 61 of the DVCR 3, the CLOSE command is output.

The format of the CLOSE command illustrated in Fig. 19 is basically similar to the WRITE OPEN command shown in Fig. 12, except for the following point. The subfunction of the WRITE OPEN command shown in Fig. 12 indicates 03₁₆, which represents WRITE OPEN, while the subfunction of the CLOSE command shown in Fig. 19 indicates 00₁₆, which indicates CLOSE.

The process then proceeds to step S31 in which the controller 11 determines whether there are any other resources related to the reservation. In this case, although processing for making a reservation in the tuner sub-unit 12 has been completed, another processing for making a reservation in the VCR sub-unit 33 of the DVCR 3 is required. Accordingly, the process returns to step S12 in which processing similar to that performed on the RSB 51 is executed on the RSB 61 of the DVCR 3.

If it is determined in step S31 that there are no other resources related to the reservation, the processing is completed.

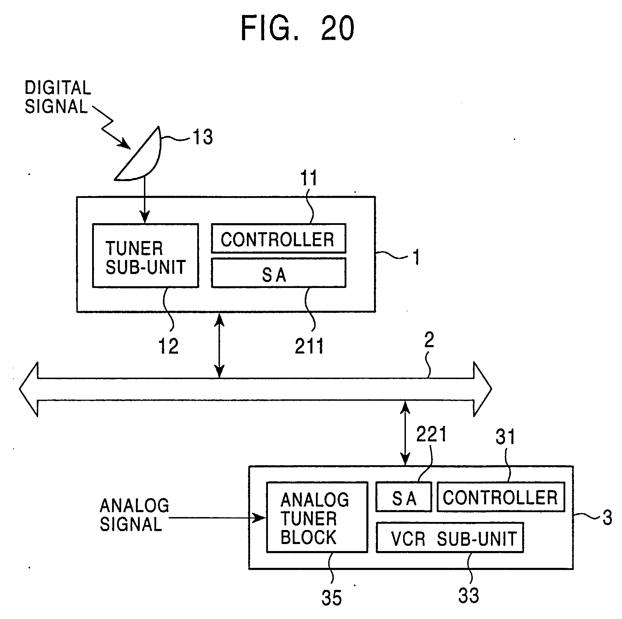

A description is given below of a network system incorporating another embodiment of the present invention with reference to Fig. 20.

The network system shown in Fig. 20 is formed of the IRD 1 and the DVCR 3 connected via the bus 2.

The controller 11 of the IRD 1 controls the entire IRD 1 by receiving a channel-selecting operation or a recording-reservation operation performed by a user. The controller 11 also controls the DVCR 3 by using a predetermined command (AV/C Command Transaction Set). The CS antenna 13 receives digital signals of a digital satellite broadcast transmitted via a communication satellite (not shown) and outputs the digital signals to the tuner sub-unit 12. The tuner sub-unit 12 extracts a predetermined channel signal from the digital signals input from the CS antenna 13 under the control of the controller 11, and outputs the extracted signal to the VCR sub-unit 33 of the DVCR 3 via the bus 2. The controller 11 further searches for information stored in a Scheduled Action (SA) descriptor 221 of the DVCR 3.

A SA descriptor 211, which serves as a sub-unit of the IRD 1, stores information concerning recording reservations received and determined by the controller 11.

The controller 31 of the DVCR 3 controls the entire DVCR 3 by receiving a reproducing-instruction operation or a recording-reservation operation performed by a user. An analog tuner block 35 extracts a predetermined channel signal from the input analog signals under the control of the controller 31 and outputs the extracted signal to the VCR sub-unit 33.

The VCR sub-unit 33 records on magnetic tape (not shown) a video signal input from the analog tuner block 35 or a video signal input from the tuner sub-unit 12 of the IRD 1 via the bus 2.

The SA descriptor 221, which serves as a sub-unit of the DVCR 3, stores and manages information of recording reservations of the DVCR 3.

According to the above-described network system, in making a recording reservation, the user inputs the settings (the channel, the recording start time, etc.) of the recording reservation into the IRD 1. If the recording reservation does not cause double-booking, the input reservation is accepted and then written into the SA descriptor 211 of the IRD 1.

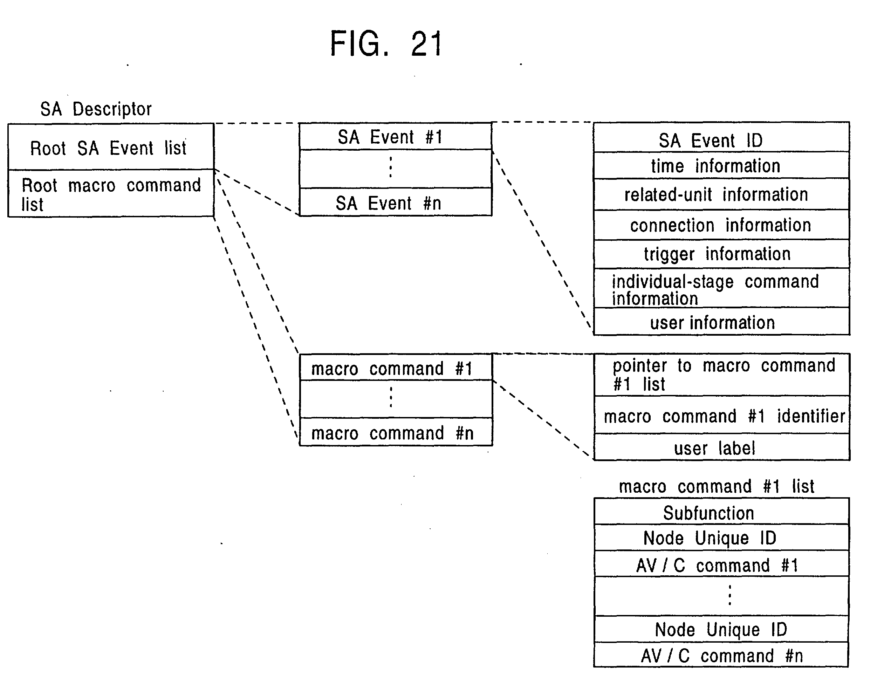

Fig. 21 illustrates the directory structure of the SA Descriptor 211 of the IRD 1 (the SA Descriptor 221 is configured similarly to the SA Descriptor 211, though it is not shown). The SA Descriptor 211 is formed of a Root SA Event list consisting of a plurality of items of reservation information (SA Event #i) and a Root macro command list, which is a table for managing the macro command #i registered within the unit.

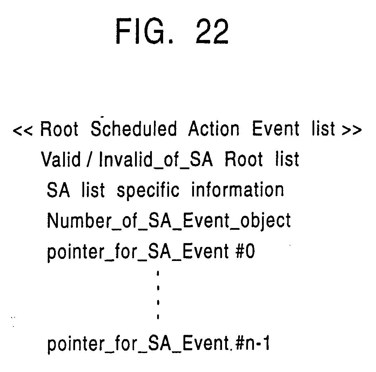

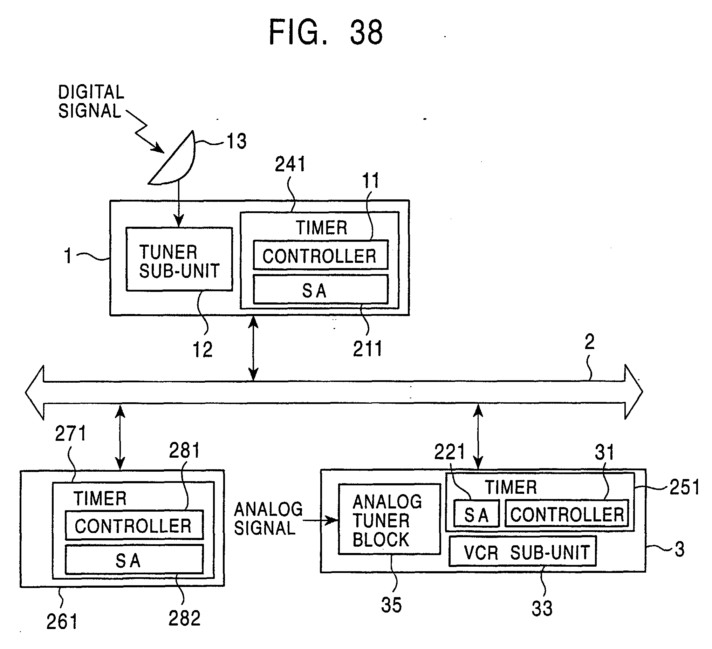

Fig. 22 illustrates a more detailed configuration of the Root SA Event list. The header of the list includes, as shown in Fig. 22, Valid/Invalid_of_SA Root list, which indicates whether the SA descriptor 211 (all the events described in the SA descriptor 211) is valid or invalid. For example, it becomes possible for a super timer 271, which will be discussed with reference to Fig. 38, to control the individual electronic machines of the entire system by turning off the flag of the Valid/Invalid_of_SA Root list while the detailed settings of the SA descriptors of the individual electronic machines remain the same.

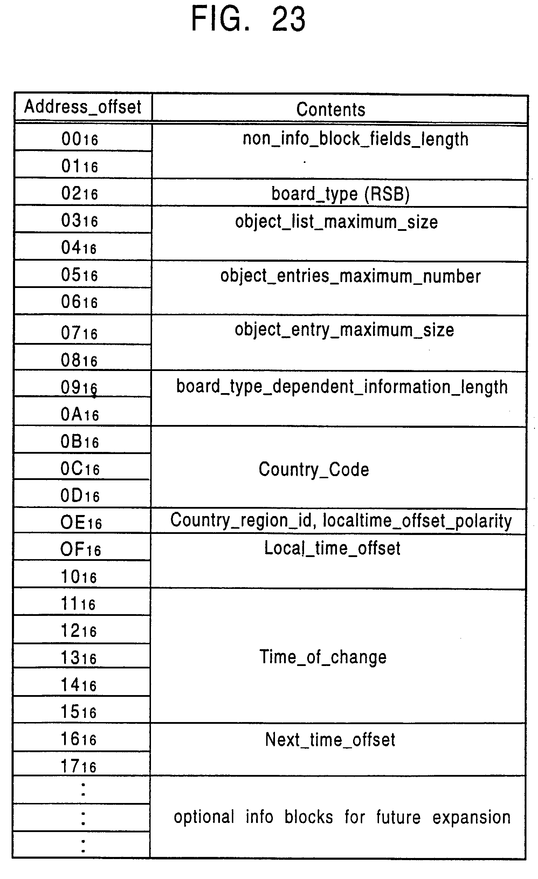

The SA list specific information includes the information shown in Fig. 23. Details of the information shown in Fig. 23 are basically similar to those shown in Fig. 7, and an explanation thereof is thus omitted. The Number_of_SA_Event_object represents the number of the following SA_Events. Subsequently, the pointer_for_SA_Event #i indicating the pointer to each SA Event, such as a recording reservation, is provided.

The reservation information (SA Event #i) is formed of an SA Event ID, time information, related-unit information, connection information, trigger information, individual-stage command information, and user information. The SA Event ID includes an ID that allows the corresponding reservation information to be uniquely identified within the network or the related unit. The time information contains the standby time, the recording start time, the recording end time, and so on. The related-unit information describes the Node (Global) Unique ID (which is an ID unique to the unit rather than a Node ID which is variable every time the bus is reset) of the reservation-related node (in this case, the DVCR 3), the SubunitType, and the Subunit ID. The connection information indicates the bandwidth of the bus 2 and information about the plug. The trigger information includes the type of trigger (time or message). The individual-stage command information designates the macro commands executed at the individual stages (standby stage, start stage, end stage, suspend stage, and restart stage). The user information contains a label, etc.

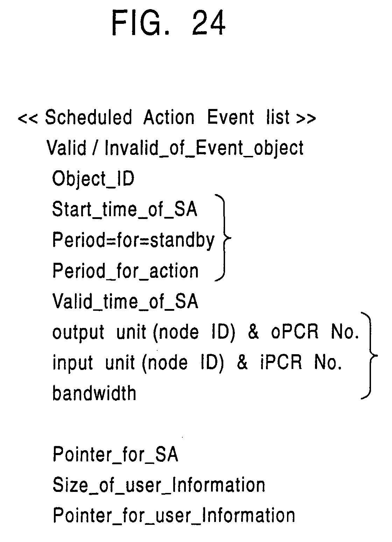

Fig. 24 illustrates a more detailed configuration of the SA Event list. The Valid/Invalid_of_Event_object is a flag indicating whether the event is valid or invalid. For example, it is assumed that recording of a serial drama which is broadcast every week is reserved. If broadcasting of the program of the serial drama is temporarily canceled due to broadcasting of a baseball game, the reserve-recording processing is temporarily canceled by turning off the Valid/Invalid_of_Event_object flag while maintaining the detailed reservation settings of the program. The Object_ID is the ID of the event, which is a unique value within the unit.

The Start_Time_of_SA indicates the start time of the event by the absolute time. The Period_for_standby represents the standby period, which is specifically varied among the units. The standby processing starts and lasts for the Period_for_standby before the Start_Time_of_SA. The Period_for_action indicates the execution time of the event. The value obtained by adding the Period_for_action to the Start_Time_of_SA represents the end time of the event. That is, the Period_for_standby and the Period_for_action are designated by the relative time obtained from the Start_time_of_SA, which is represented by the absolute time. This makes it possible to input the standby period of each unit as a fixed value, thereby facilitating the creation of applications. Also, since the end time is indicated by the relative time, it is easy to postpone or advance the end time (only the start time is required to be changed, thereby eliminating the need for changing the end time).

The Valid_time_of_SA indicates the valid period of the event, which is used for rearranging the reservation information when the reservation has not been performed for some reason or when the reservation information of the sub-unit has not been used. Also, if the valid period is set, the following advantage is offered. When the same reserve-recording, for example, a serial drama, is performed during a predetermined period, such as three months, six months, or a year, it is automatically completed after a lapse of the predetermined period (after the broadcasting of the serial drama is finished).

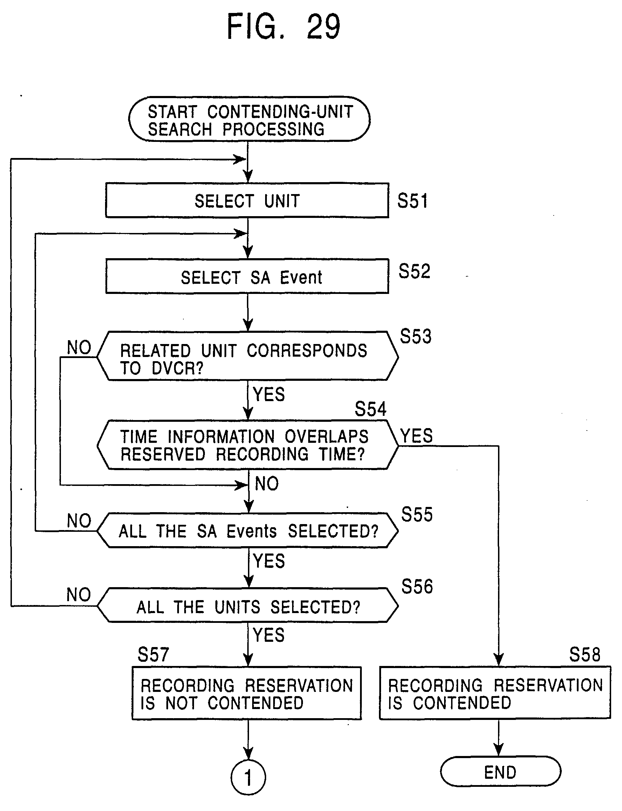

The output unit (node ID) & oPCR No. represents the ID of the unit (node ID) which outputs the event and the number of the output plug control register. The input unit (node ID) & iPCR No. indicates the node ID of the electronic machine which receives the corresponding event and the number of the input plug control register. The above-mentioned information is required as connection information for transmitting and receiving data to and from the other electronic machines via the bus 2. The bandwidth designates the bandwidth to be occupied and required for transmitting and receiving data in the bus 2. Such information is used when the resource-contention situation of the network is checked (which is described in detail below with reference to the flow chart of Fig. 29). Without the above-described information, it is necessary to scan the actual commands in order to check for a contention situation. It thus takes time to check for the contention situation.

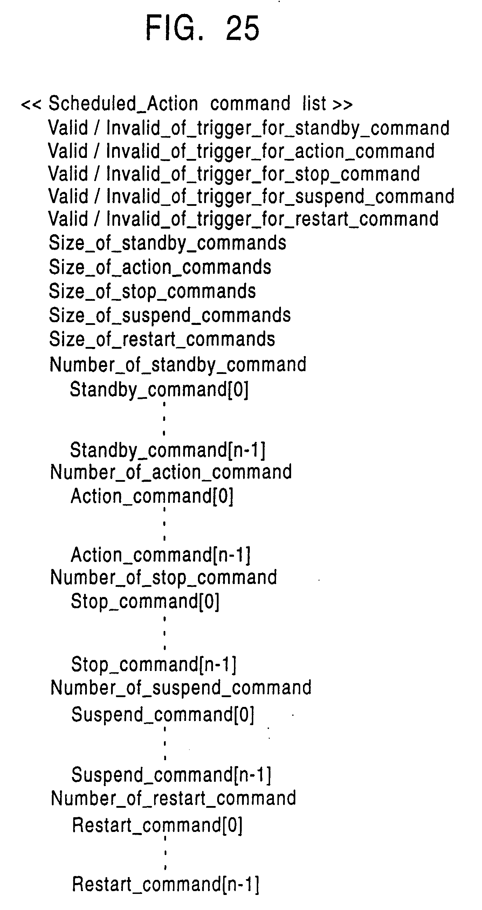

The Pointer_for_SA is a pointer to the SA_command_list in which the execution command is described. That is, the commands shown in Fig. 25 can be specified by using the pointer_for_SA.

The size of the execution command set varies according to the reserving operation. Accordingly, the command list is provided separately, as shown in Fig. 25.

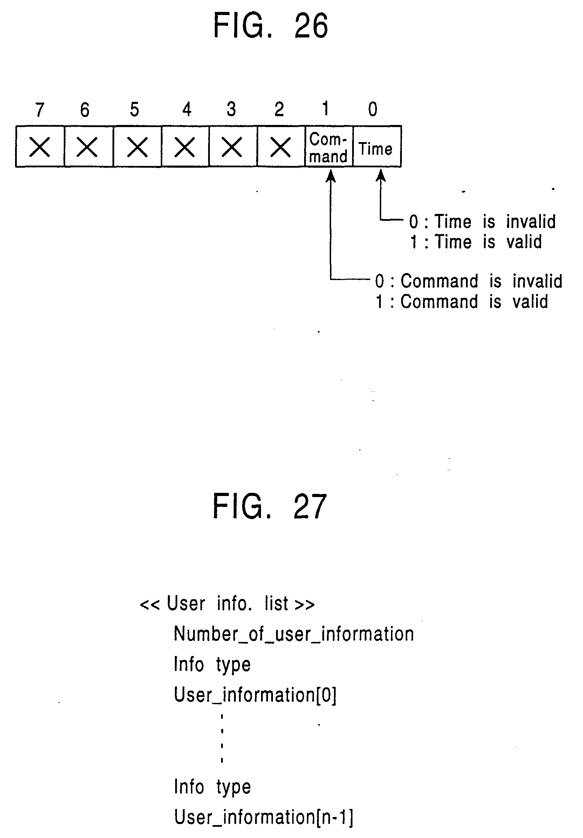

The Size_of_user_Information represents the size of the user information (details will be discussed with reference to Fig. 27). The Pointer_for_user_Information indicates the pointer to the User_Information_list shown in Fig. 27, which will be described later. The User_information_list is also provided separately since the size of the user information varies.

Fig. 25 illustrates a detailed configuration of the SA command list. The command set shown in Fig. 25 is categorized into five stages, such as standby, action, stop, suspend, and restart. At the start of the command list, the flags indicating whether the triggers of the five individual stages are valid or invalid. For example, the Valid/Invalid_of_trigger_for_standby_command represents the validity of the standby trigger. More specifically, this flag is configured, as illustrated in Fig. 26. Each flag is set to be valid (1) or invalid (0), as shown in Fig. 26, for individual items, such as time and command. This makes it possible to represent whether the trigger is based on the internal time or the external time.

Subsequently, the size of the command is described by stages. For example, the size_of_action_commands indicates the size of the action command. Accordingly, the header address of the command set of each stage can be calculated, i.e., in this case, the size of the Number_of_action_command [0] is calculated.

Thereafter, the commands of the individual stages are described. In each command, the number of commands of each stage is indicated, followed by the specific commands. For example, according to the suspend command, the number of suspend commands is represented by the Number_of_suspend_command, followed by n number of Suspend_command[0] through Suspend_command[n-1]. In this manner, it is possible to write a plurality of execution commands in each stage.

The Standby_command starts and lasts for the Period_for_standby before the Start_time_of_SA. According to the standby processing, for example, the tuner sub-unit 12 is set in the channel-selecting state, a connection required for transmitting data from the IRD 1 to the DVCR 3 via the bus 2 is established, and the channel and the band required for transmitting data are reserved. The Action_command commences at the time of the Start_time_of_SA. This prompts the tuner sub-unit 12 to start a reserve-recording operation at a predetermined time.

The Stop_command is executed after a lapse of the Period_for_action from the Start_time_of_SA. Accordingly, the reserve-recording operation performed by the tuner sub-unit 12 is completed at a predetermined time.

The Suspend_command is transmitted when a program to be broadcast is interrupted by a broadcast station for some reason. By executing the Suspend_command, the event processing is temporarily interrupted.

The Restart_command is a command for canceling the Suspend mode, thereby restarting the temporarily interrupted event processing.

In this manner, by describing the commands by stages, it is possible to separate the commands by different execution periods, thereby making it easy to access the target command set.

Additionally, since the commands can be set to be valid or invalid by stages, it is possible to specify by stages that the trigger of the command is based on the internal time or the external time.

Fig. 27 illustrates a more detailed configuration of the user information. The number of items of user_information is first described, as shown in Fig. 27, in the Number_of_user_information. The user_information is used as an area into which the user is able to write data of each event, e.g., a nickname or notes (of each event) can be written into the user_information. Also, the Info type is added to each item of user_information, and a tag, for example, may be described in the Info type in order to make easy access to the user_information.

In this manner, by adding a nickname, the user is able to readily identify each event (reservation). The user is also able to use this area for making comments.

Referring back to Fig. 21, the macro command #i is formed of a pointer to the macro command list #i, a macro command #1 identifier, and a user label. The macro command list #1 represented by the pointer to the macro command list #1 describes a pair of the AV/C command to be executed and the Node Unique ID. The Subfunction includes information defining the operation of the command set (for example, in case of the occurrence of an error, the operation is terminated or forcefully executed to the end).

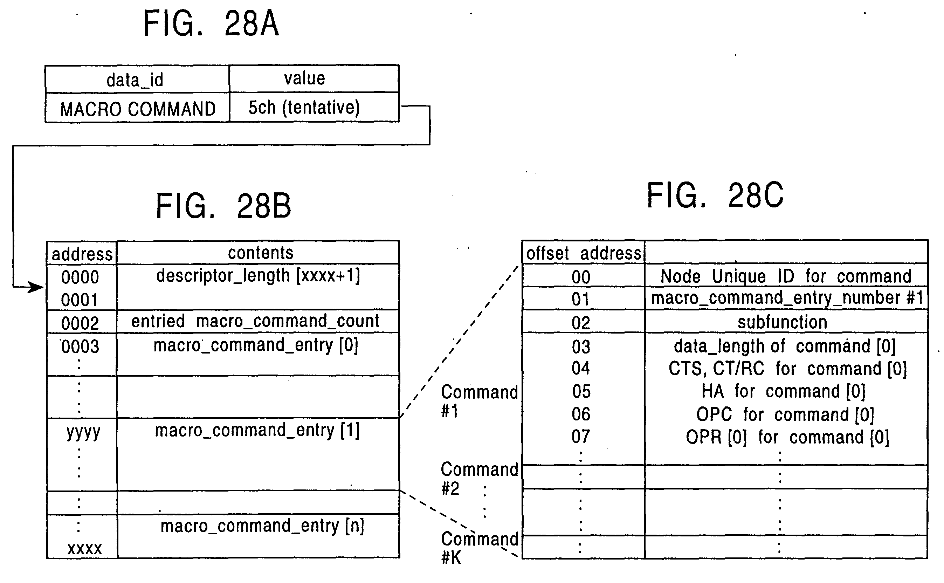

Figs. 28A, 28B, and 28C illustrate descriptor information concerning macro commands stored in the SA descriptor 211 shown in Fig. 21.

The descriptor information includes not only information of macro commands, but also various items of information. Accordingly, to identify different items of information, a data ID (data_id) is assigned to each item of information. In this embodiment, MACRO COMMAND is assigned as the data ID, as illustrated in Fig. 28A, to the information concerning the macro command.

In the embodiment shown in Fig. 28A, 50h (h represents that the preceding number is hexadecimal) is assigned to the MACRO COMMAND. The predetermined values have been assigned to certain types of information as the data IDs, for example, 40h has been allocated to information concerning the specifications of an AV system or the function of a subunit (SUBUNIT IDENTIFIER), and 41h has been allocated to information (OBJECT LIST) concerning a selectable object (the object available to select). Basically, the data ID to be assigned to the MACRO COMMAND may be any value other than the above-mentioned predetermined values.

The data ID serves as the handle of the information. Accordingly, by referring to the data ID, it is possible to identify the address in the descriptor at which the information assigned with the data ID is stored.

In this embodiment, for example, the information concerning the macro command (hereinafter sometimes referred to as the "macro command descriptor information") is stored, as shown in Fig. 28B, from the address 0000h.

In this embodiment, for example, the descriptor has a 16-bit address space, and 8-bit (1-byte) data can be stored in each address.

In the macro command descriptor information, the length (size) of the macro command information descriptor, i.e., descriptor_length, is indicated in two bytes at the header address and the second address (0000h and 0001h in Fig. 28B). That is, in the embodiment shown in Fig. 28B, the macro command descriptor information is stored at the address 0000h through xxxxh, and xxxxh + 1 is indicated as the length of the macro command descriptor information, i.e., descriptor_length.

At the third address (0002h in Fig. 28B), the number of macro commands, i.e., entried macro_command_count contained in the macro command descriptor information is indicated in one byte. That is, a plurality of macro commands rather than a single macro command can be described in the macro command descriptor information, and the number of macro commands is indicated in the entried macro_command_count. In Fig. 28B, n + 1 macro commands are expressed.

At the fourth address (0003h in Fig. 28B) and the subsequent addresses, command sets forming the macro command are described in the units of macro commands (hereinafter sometimes referred to as the "entry").

The entry macro_command_entry[i] (i = 0, 1, ..., n) is formed, for example, as shown in Fig. 28C. It should be noted that the length of the entry is variable. At the left column of Fig. 28C, the offset address is indicated from the header of the entry.

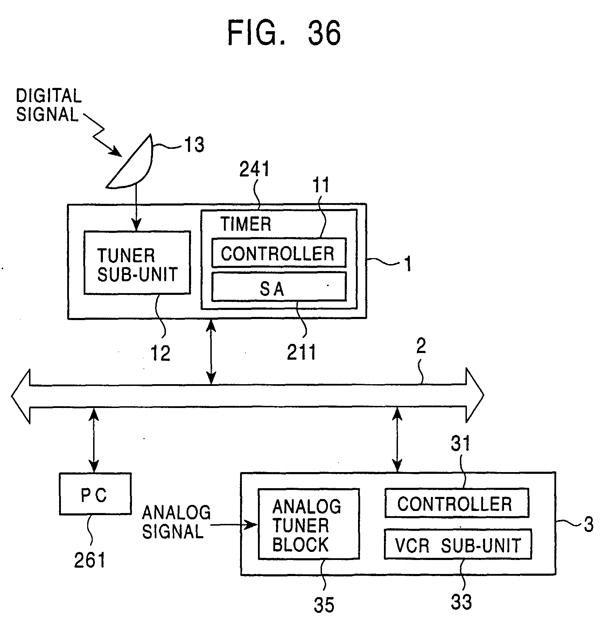

The "Node Unique ID for command" is described at the first address (00h in Fig. 28C) of the entry. For example, as will be described with reference to Fig. 36, when a personal computer (PC) 261 controls, via the IRD 1, the DVCR 3 which is not provided with an SA descriptor, the destination to which the command is transferred is the IRD 1, but the destination on which the command is executing is not the IRD 1, but the DVCR 3. Thus, to designate the destination on which the command is executing, the "Node Unique ID for command" is indicated.

At the subsequent address (01h in Fig. 28C), the entry number for identifying the entry, i.e., "macro_command_entry_number" (hereinafter simply referred to as the "entry_number) is described. Accordingly, concerning the entry "macro_command_entry[i]", for example, i is indicated as the entry_number. At the third address of the entry (02h in Fig. 28C), the execution procedure "subfunction" of the commands to be subsequently described is represented. That is, at the fourth address (03h in Fig. 28C) and the subsequent addresses of the entry, commands #0, #1, ..., #K forming the macro command are described, and the procedure and conditions under which the commands are executed are described as the subfunction at the third address of the entry. More specifically, for example, the following procedure and conditions are described as the subfunction. The command #0 is first executed, and if the execution of the command #0 is correctly completed, the command #1 is executed. If the execution of the command #0 is abnormally terminated, the command #2 is executed.

At the fourth address (03h in Fig. 28C) and the subsequent addresses of the entry, the commands #0, #1, ..., #K forming the macro command are indicated, as discussed above. These commands are described in compliance with the format of the AV/C command. By taking the command #0 as an example, the data_length of command[0] indicating the length of the command #0 is described at the header address, followed by the AV/C command.

More specifically, the command transaction set (CTS) and the command type/response code (CT/RC) are first indicated. Subsequently, the header address (HA) and the operation code (OPC) are sequentially described, followed by a required number of operands (OPRs).

If the CTS indicates 0h, the command #0 is an AV/C command set. The CT/RC represents the type, i.e., command or response. Further, the HA designates the destination to which the command is to be transmitted or the source from which the response has been sent. The OPC indicates the content of processing to be executed. The OPR represents the parameter required for the processing.

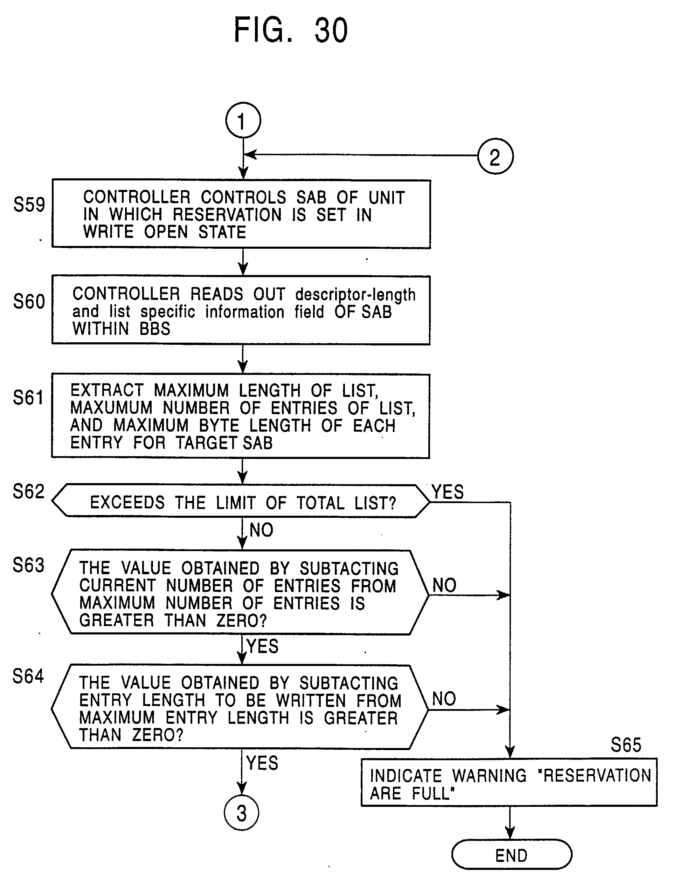

A description is now given of the contending-unit search processing performed by this network system with reference to the flow chart of Figs. 29 through 32. This processing is started when an operation for a recording reservation to be performed by the DVCR 3 is input into the IRD 1 by the user and is detected by the controller 11. In step S51, the controller 11 selects one of the units connected to the bus 2.

In step S52, the controller 11 selects and reads one of the items of reservation information (SA Event) from the Root SA Event list of the SA Descriptor stored in the SA of the unit selected in step S51. Then, in step S53, the controller 11 refers to the related-unit information of the SA Event read in step S52, and determines whether the Node Unique ID, the SubunitType, and the Subunit ID included in the related-unit information correspond to the DVCR 3. If the outcome of step S53 is yes, the process proceeds to step S54. In step S54, the controller 11 checks the time information of the SA Event read in step S52, and determines whether the recording time included in the time information overlaps the reserved recording time input by the user. If it is determined that the recording time does not overlap the reserved recording time, the process proceeds to step S55.

If it is determined in step S54 that the recording time contained in the time information of the SA Event read in step S52 overlaps the reserved recording time input by the user, the process proceeds to step S58.

In step S58, the controller 11 determines that the input recording reservation is contended (causing double-booking), and the information of the double-booking is reported to the user by a predetermined method.

For example, by presenting overlapping recording reservations to the user, the user may be instructed to select one of them. Alternatively, a DVCR on which a recording reservation is not made at the overlapping time may be searched for and presented to the user.

If it is found in step S53 that the Node Unique ID, the SubunitType, and the Subunit ID included in the related-unit information do not correspond to the DVCR 3, step S54 is skipped.

In step S55, the controller 11 determines whether all the SA Events included in the Root SA Event list of the SA Descriptor of the unit selected in step S51 have been selected in step S52. The processing from step S52 to step S55 is repeated until the controller 11 determines that all the SA Events have been selected.

If it is found in step S55 that all the SA Events have been selected, the controller 11 determines in step S56 whether all the units connected to the bus 2 have been selected in step S51. The processing from step S51 to step S56 is repeated until the controller 11 determines that all the units have been selected.

If it is found in step S56 that all the units have been selected, the controller 11 determines in step S57 that the input recording reservations are not contended (free from the occurrence of double-booking), and stores the information of the input recording reservation in the SA descriptor 211.

Subsequently, in step S59, the controller 11 causes the unit in which the reservation is to be set to be in the WRITE OPEN state. For example, if the target unit is the tuner sub-unit 12 of the IRD 1, the controller 11 outputs the WRITE OPEN command so that the SAB 52 of the IRD 1 having the tuner sub-unit 12 is in the WRITE OPEN state (write enabled state).

In practice, however, the SAB 52 and the controller 11 are not connected via the bus 2. Accordingly, the controller 11 controls the SAB 52 as if the WRITE OPEN command were supplied to the SAB 52 via the bus 2.

The process then proceeds to step S60 in which the controller 11 reads out the descriptor_length and the SA list_specific_information (Fig. 23) of the SAB 52 within the BBS 14. The reading operation is performed by using, for example, the READ command. In this case, since the controller 11 and the SAB 52 are not connected via the bus 2, as stated above, the above data is directly read from the controller 11 to the SAB 52.

In step S61, the controller 11 extracts for the SAB 52 the maximum length of the list (the object_list_maximum_size shown in Fig. 23), the maximum number of entries of the list (the object_entries_maximum_number shown in Fig. 23), and the maximum byte length of each entry (the object_entry_maximum_size shown in Fig. 23).

The controller 11 then determines in step S62 whether data (reservation information) to be recorded on the SAB 52 causes an excess of the maximum length of the list extracted in step S61. If the outcome of step S62 is no, the process proceeds to step S63 in which the controller 11 determines whether the value obtained by subtracting the current number of entries from the maximum number of entries of the list extracted in step S61 is greater than zero, i.e., whether there is any entry left for writing data. If the result of step S63 is yes, the process proceeds to step S64 in which the controller 11 determines whether the value obtained by subtracting the length of the entry of the reservation information to be written from the maximum length of the entry extracted in step S61 is greater than zero, i.e., whether there is any space left for the entry into which data is written.

If any one of the conditions set in steps S62 through S64 is not satisfied, the process proceeds to step S65 in which the controller 11 indicates a warning, such as "reservations are full", to the user. This enables the user to recognize that no more reservations can be made.

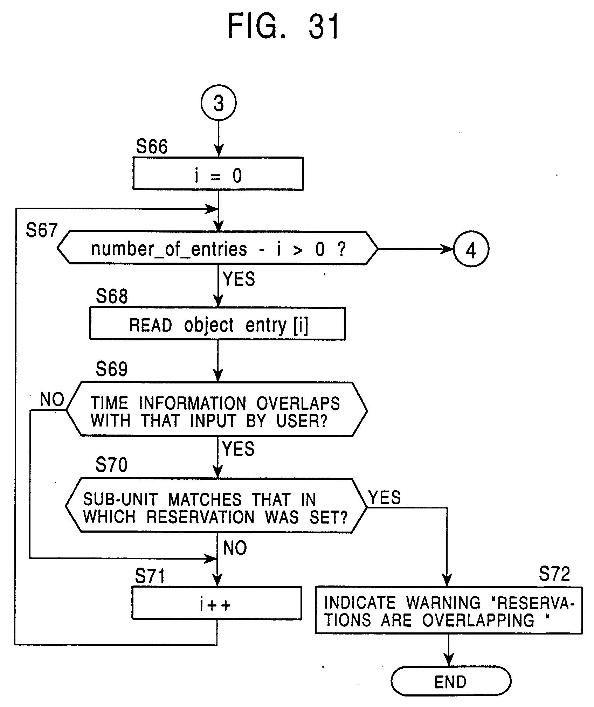

If all the conditions set in steps S62 through S64 are met, the reservation information can be written into the SAB 52, and a determination is further made in steps S66 through S73 of Fig. 31 whether the time of the reservation input by the user overlaps with that of the reservation which has already been accepted, i.e., whether double-booking has occurred.

More specifically, in step S66, a variable i is initialized to zero. It is then determined in step S67 whether the value obtained by subtracting the variable i from the number of entries, i.e., the number_of_entries, recorded on the SAB 52 is greater than zero, i.e., whether all the entries recorded on the SAB 52 have been searched. If the outcome of step S67 is yes, the process proceeds to step S68 in which the controller 11 reads out the object_entry[i] (in this case, the object_entry[0]) shown on the SAB 52.

Although the reading operation in step S68 is also performed by using the READ command, the descriptor identifier is set by the object position. In the object_entry[i], the time information of the registered reservation (the start_time and the duration shown in Fig. 8) and the ID information of the target sub-unit (the subunit_type_and_ID[0] of the info blocks shown in Fig. 8) are stored.

Then, the controller 11 determines in step S69 whether the time information (the start_time and the duration) input by the user overlaps with the time information (the start_time and the duration) read in step S68. If the result of step S69 is yes, the process proceeds to step S70. In step S70, the controller 11 determines whether the sub-unit in which the reservation was set (in this case, the tuner sub-unit 12) coincides with the sub-unit read in step S68 (the subunit_type_and_ID). If the outcome of step S70 is yes, the time and the sub-unit read in step S68 match those input by the user. Accordingly, the process proceeds to step S72 in which the controller 11 indicates a warning, such as "reservations are overlapping". As a result, the occurrence of double-booking can be prevented.

If it is found in step S69 that the time information input by the user does not overlap with the time information read in step S68, or if it is found in step S70 that the sub-units do not coincide with each other even if time overlapping has occurred in step S69, there is no possibility of generating double-booking. Accordingly, in step S71, the variable i is incremented by one, and the process returns to step S67. Processing similar to the above-described processing is repeated until it is determined in step S67 that the value obtained by subtracting the variable i from the number_of_entries is not greater than zero. That is, all the object_entries[i] stored in the SAB 52 are searched to determine whether there are any overlapping reservations.

If it is found in step S67 that the value obtained by subtracting the variable i from the number_of_entries is not greater than zero, i.e., that all the object_entries[i] have been searched, the process proceeds to step S73. In step S73, the controller 11 outputs a CREATE command to the SAB 52 and creates an object entry in the SAB 52. In this case, the CREATE command is not actually output, and processing is executed as if the CREATE command were output, as stated above.

The above-described steps S62 through S65 may be executed after it is determined in step S67 that the all the entries have not been completely searched.

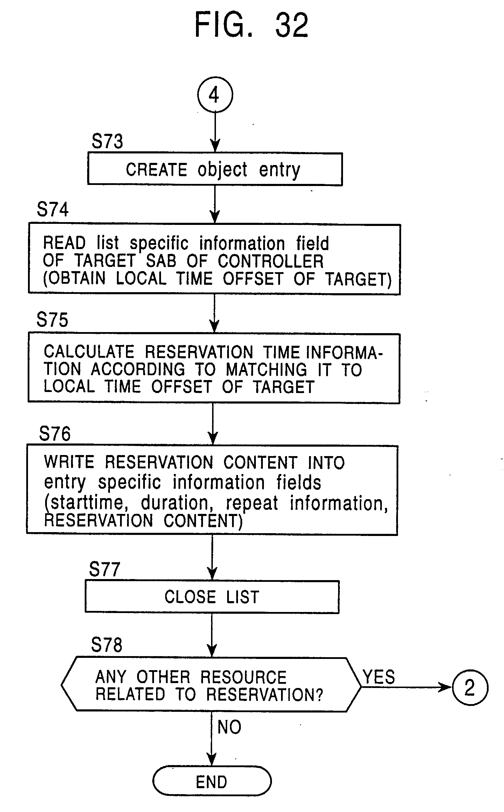

In step S73 of Fig. 32, the INSERT command may be used instead of the CREATE command.

The process then proceeds to step S74 in which the controller 11 reads the list specific information field (Fig. 23) of the target SAB 62 of the DVCR 3, thereby obtaining the Local_time_offset of the DVCR 3. Then, in step S75, the controller 11 calculates the time information of the reservation of the VCR sub-unit 33 input by the user according to the Local_time_offset of the DVCR 3 obtained in step S74. More specifically, although the controller 11 operates based on the UTC (is capable of acquiring the UTC), the user inputs the time at which the VCR sub-unit 33 of the DVCR 3 is used based on the local time of the IRD 1 rather than the DVCR 3. The controller 11 then converts the time input by the user (relative to the local time of the IRD 1) into the UTC and further obtains the time corresponding to the Local_time_offset from the UTC, thereby finally calculating the time based on the local time of the DVCR 3.

In step S76, the controller 11 writes the reservation content, such as the start_time, the duration, and the repeat_information, etc. into the entry_specific_information fields of the SAB 52. The start_time is recorded based on the local time of the DVCR 3 calculated in step S75.

The process proceeds to step S77 in which the controller 11 closes the list, i.e., the SAB 52. Simultaneously, the controller 11 outputs the CLOSE command to the SAB 52. As stated above, the controller 11 directly closes the SAB 52 without issuing the CLOSE command since the controller 11 and the SAB 52 are not connected via the bus 2.

The process then proceeds to step S78 in which the controller 11 determines whether there are any other resources related to the reservation. In this case, although processing for making a reservation in the tuner sub-unit 12 has been completed, another processing for making a reservation in the VCR sub-unit 33 of the DVCR 3 is required. Accordingly, the process returns to step S59 in which processing similar to that performed on the SAB 52 is executed on the SAB 62 of the DVCR 3.

If it is determined in step S78 that there are no other resources related to the reservation, the processing is completed.

If the information concerning the determined recording reservation is written into the SA descriptor 211 of the IRD 1 and the SA descriptor 221 of the DVCR 3, which is a related unit, the unit selected in step S51 may be the DVCR 3 only.

Additionally, simultaneously with the processing of step S53 or step S54, the connection information of the SA Event may be read so that the situation of the currently used band of the bus 2 can be obtained.

In this manner, it is only essential that part of the SA Event of the SA Descriptor is read from the SA of each unit without needing to check the situation of recording reservations by verifying the execution commands of the individual units one-by-one. As a result, information concerning the determined recording reservations can be obtained.

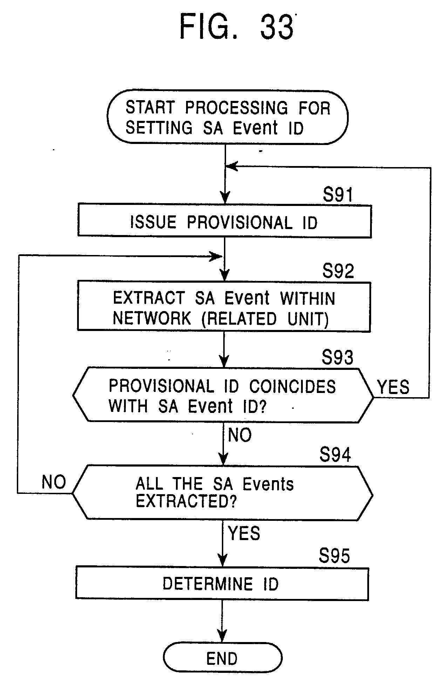

The processing for setting the SA Event ID in this network system will now be described with reference to the flow chart of Fig. 33. After a recording reservation using the DVCR 3 input into the IRD 1 from the user and detected by the controller 11, the above-described reservation (contending-unit searching) processing is executed. Thereafter, the processing shown in Fig. 33 commences.

In step S91, the controller 11 generates a provisional ID for uniquely identifying the reservation information within the network (or the related unit).

Then, in step S92, the controller 11 reads out a SA Event within the network and extracts the SA Event ID of the read Event. Subsequently, the controller 11 determines in step S93 whether the provisional ID generated in step S91 matches the SA Event ID extracted in step S92. The processing from step S91 to step S93 is repeated until it is found in step S93 that the two IDs do not coincide with each other.

If the outcome of step S93 is no, the controller 11 determines in step S94 whether all the SA Events of the unit (or the related unit) within the network have been extracted. The processing from step S92 through step S94 is repeated until the result of step S94 is no. If it is found in step S94 that all the SA Events have been extracted, the process proceeds to step S95 in which the controller 11 records the provisional ID generated in step S91 on the SA descriptor 211 as the SA Event ID.

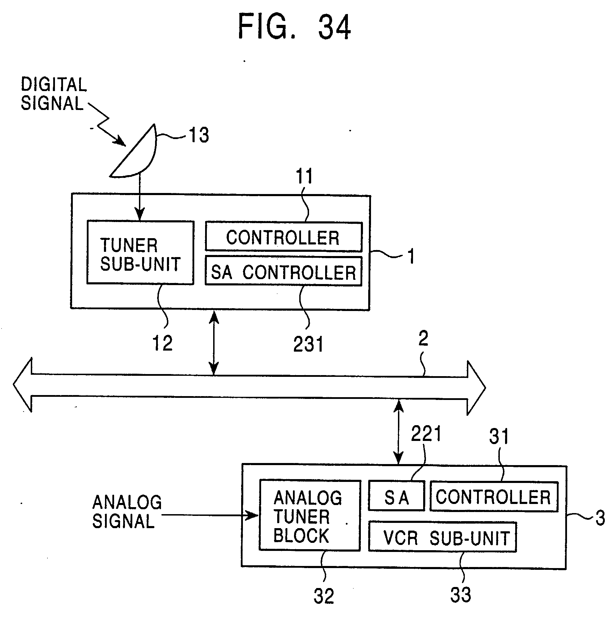

Fig. 34 illustrates the configuration in which the IRD 1 has a SA controller 231 rather than the SA descriptor 211, which is a subunit. Although the SA controller 231 is unable to store the SA Descriptor, it has the function of checking the SA Descriptor stored in the SA of another unit, which corresponds to the function of, for example, the Read Descriptor or the Write Descriptor of AV/C.

As described above, an ID that allows the reservation information to be uniquely identified within the network (or the related unit) is provided. Thus, a certain recording reservation can be designated within the network (or the related unit) so as to be easily corrected or deleted.

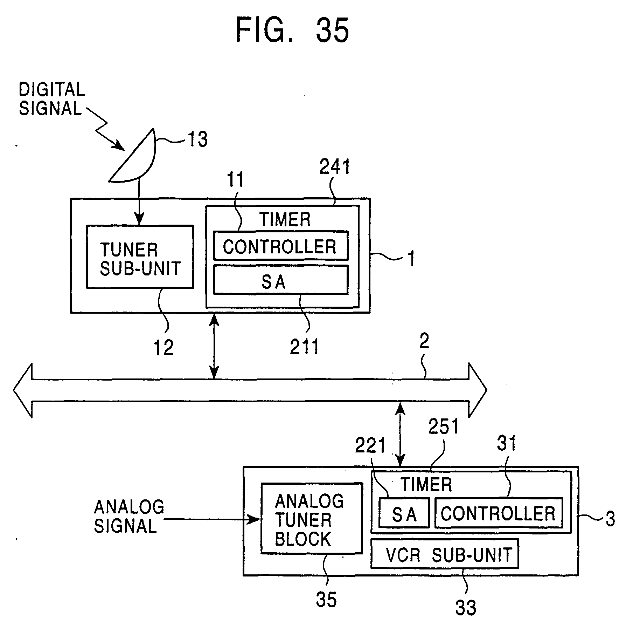

Another embodiment of the configuration of a network system that performs a reserve-recording operation is as follows. In the embodiment shown in Fig. 35, a timer 241 is formed by the controller 11 and the SA descriptor 211 of the IRD 1, while a timer 251 is formed by the controller 31 and the SA descriptor 221 of the DVCR 3. A user performs a reserve-recording operation both on the IRD 1 and the DVCR 3 for transferring data received by the IRD 1 at a predetermined time to the DVCR 3 and recording it on the DVCR 3. More specifically, the information indicating that a predetermined channel broadcast is to be received at a predetermined time and transferred to the DVCR 3 via the bus 2 is stored in the SA descriptor 211. The controller 11 performs a counting operation, and upon reaching a predetermined time, the controller 11 reserves the channel and the band required for transferring the data to the DVCR 3 via the bus 2 and causes the tuner sub-unit 12 to receive the program of the designated channel. The controller 11 then transfers the received data to the DVCR 3 via the bus 2.

Reserve-recording information indicating that data transferred from the IRD 1 is to be received at a predetermined time and is to be recorded on the recorder 3 is also stored in the SA descriptor 221 of the DVCR 3. The controller 31 performs a counting operation, and upon reaching a predetermined time, the controller 31 causes the VCR sub-unit 33 to record the data transferred from the IRD 1 via the bus 2.

Fig. 36 illustrates still another embodiment of the configuration of a network system. In this embodiment, the DVCR 3 is not provided with the SA descriptor 221. The personal computer (PC) 261 causes the IRD 1 to store reserve-recording information in the SA descriptor 211 of the IRD 1. In this case, as discussed above, the PC 261 designates the IRD 1 as the destination to which the reserve-recording information is to be transferred, and also specifies the DVCR 3 as the destination to which the IRD 1 is to transmit a command at a predetermined time.

Upon reaching a predetermined time stored in the SA descriptor 211, the controller 11 of the IRD 1 reserves the channel and the band required for transferring the data via the bus 2, and causes the tuner sub-unit 12 to receive the predetermined channel. The controller 11 then transfers the received data to the DVCR 3 via the bus 2.

The controller 11 transmits a command to the DVCR 3 before transferring the data, and requests the DVCR 3 to record the data to be transferred from the IRD 1 on the VCR sub-unit 33. Upon receiving this command, the controller 31 of the DVCR 3 receives the data subsequently transferred from the IRD 1 and records it on the VCR sub-unit 33.

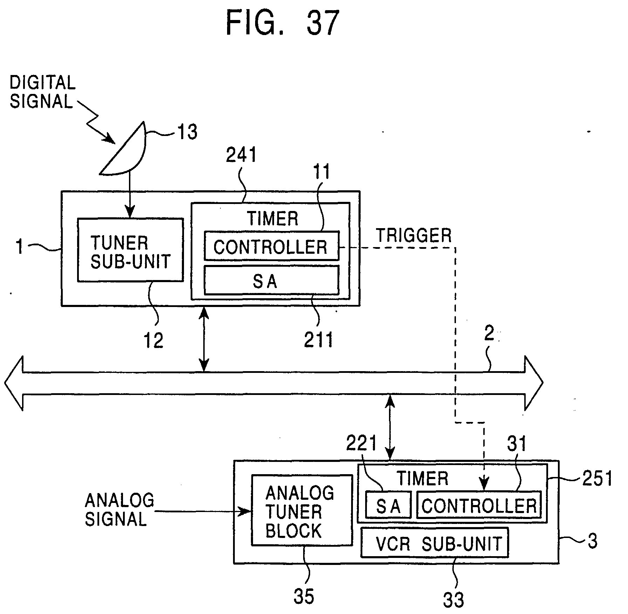

Fig. 37 illustrates a further embodiment of the configuration of a network system. In the embodiment shown in Fig. 36, it is necessary that the time of the counting operation performed by the controller 11 of the IRD 1 should match that by the controller 31 of the DVCR 3. In the embodiment shown in Fig. 37, however, the reserve-recording operation can be performed even if the time of the counting operation performed by the controller 11 does not match that by the controller 31. More specifically, in this embodiment, upon reaching a predetermined time stored in the SA descriptor 211, the controller 11 reserves the channel and the band required for transferring the data via the bus 2, and also outputs a trigger signal to the controller 31 of the DVCR 3. The controller 11 also controls the tuner sub-unit 12 to receive a predetermined channel signal and to transfer it to the DVCR 3 via the bus 2. In response to the trigger signal from the controller 11 of the IRD 1, the controller 31 of the DVCR 3 causes the VCR sub-unit 33 to start to record the data transferred from the IRD 1.

Thereafter, upon reaching the end time of the reserve-recording operation, the controller 11 stops the operation of the tuner sub-unit 12 and also outputs a trigger signal indicating the end of the recording operation to the controller 31 of the DVCR 3. In response to the trigger signal, the controller 31 completes the recording operation performed by the VCR sub-unit 33.

Fig. 38 illustrates a further embodiment of the configuration of a network system. In this embodiment, the timer operations performed by all the electronic machines connected to the bus 2 are controlled by the super timer 271 of the PC 261. More specifically, a user stores reserve-recording information in a SA descriptor 282 forming the super timer 271. Upon reaching a predetermined time stored in the SA descriptor 282, a controller 281 reserves the channel and the band required for transferring data via the bus 2, and also requests the IRD 1 to receive a predetermined channel signal and to transfer it to the DVCR 3 via the bus 2. In response to this request, the controller 11 causes the tuner sub-unit 12 to receive the designated channel and to transfer the data to the DVCR 3 via the bus 2.

The controller 281 also requests the controller 31 of the DVCR 3 to record the data to be transmitted from the IRD 1 on the VCR sub-unit 33. In response to this request from the PC 261, the controller 31 of the DVCR 3 controls the VCR sub-unit 33 to record the data transferred from the IRD 1.

The completion of the recording operation is also executed by outputting a command from the PC 261 both to the IRD 1 and the DVCR 3.

The AV/C Resource Schedule Board is one board of the AV/C Bulletin Board Subunit. This board is for preventing the occurrence of double-booking in performing reservation processing between units connected to the network. A unit that is to reserve another unit within the network writes the reservation schedule of the RSB within the AV/C Bulletin Board Subunit of the target unit. If another unit makes a reservation for the same target unit, it refers to the RSB to obtain the reservation schedule before performing the actual reservation operation. Thus, the occurrence of double-booking can be prevented.

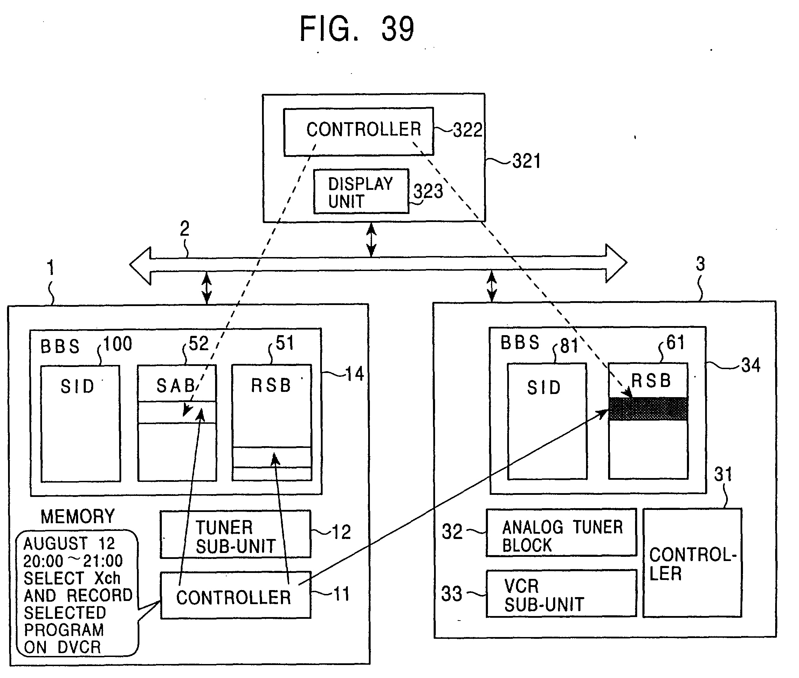

Fig. 39 illustrates another embodiment of the network system. The object ID may be stored not only in the RSB, but also in the SAB. This makes it possible to easily detect the occurrence of double-booking. It is now assumed that an IRD 321, as well as the IRD 1 and the DVCR 3, is connected to the bus 2, as illustrated in Fig. 39. The BBS 14 of the IRD 1 is provided with not only the RSB 51 and the SAB 52, but also a Subunit Identifier Descriptor (SID) 341. The SID 341 stores information for identifying which board types (in this case, the RSB 51 and the SAB 52) are supported within the BBS 14 to which the SID 341 belongs.

The BBS 34 of the DVCR 3 is provided with not only the RSB 61, but also a SID 311. The IRD 321 also possesses a controller 322 and a display unit 323.

The operation performed by the system shown in Fig. 39 is discussed in detail below. The user inputs reservation information into the controller 11 of the IRD 1. In the embodiment shown in Fig. 39, a reservation is input to select the X channel from 20:00 to 21:00 on August 12 and record the data of the selected program on the DVCR 3. The controller 11 writes the content of the reservation into a built-in memory and writes the reservation information into the RSB 51 and the SAB 52 of the BBS 14. The controller 11 also writes the schedule for using the DVCR 3 as a target into the RSB 61 of the BBS 34 of the DVCR 3. Simultaneously, the controller 11 sets the Object ID to be stored in the individual entries of the RSB 51, the SAB 52, and the RSB 61 to be the same value.

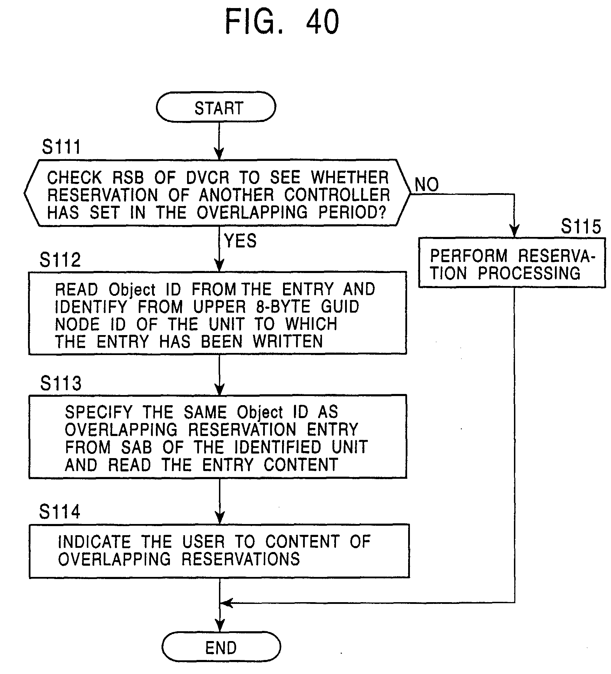

According to the aforementioned system shown in Fig. 39, a description is given below with reference to the flow chart of Fig. 40 of the processing executed when the IRD 321 makes a reservation for using the DVCR 3 at the time period overlapping the time of the reservation made by the IRD 1.

In step S111, the controller 322 of the IRD 321 checks the RSB 61 of the target DVCR 3 and determines whether there is any reservation made by another controller in the time period which overlaps with the time of the reservation made by the IRD 321. If the outcome of step S111 is no, the process proceeds to step S115 in which the controller 322 executes reservation processing similar to that described above. That is, the controller 322 writes the time information of the reservation into the RSB 61 of the DVCR 3.

If it is found in step S111 that the VCR sub-unit 33 of the DVCR 3 has been reserved by another controller at the overlapping time, the process proceeds to step S112. In step S112, the controller 322 reads the Object ID of the entry related to the reservation, and determines the node ID of the unit that has written the entry from the upper 8-byte (64 bits) GUID of the Object ID. As stated above, the GUID is inherent in each unit and is not varied every time the bus is reset. Accordingly, the controller 322 checks the GUIDs and the node IDs of the units connected to the bus 2, and then creates a look-up table about the two IDs in correspondence with each other in advance. It is thus possible to determine the node ID from the GUID by referring to the look-up table.

Subsequently, in step S113, the controller 322 designates the same Object ID as the entry of the overlapping reservation from the SAB of the unit determined in step S112 (in this case, the SAB 52 of the IRD 1), and reads the content of the entry. In step S114, the controller 322 outputs the content of the overlapping reservation to the display unit 323 and displays it. This enables the user of the IRD 321 to identify the previously reserved content.

The above-described series of operations can be executed by hardware. Alternatively, software may be used, in which case, a software program implementing the above operations may be installed into a computer built into a controller specifically used as hardware. Alternatively, the above software program may be installed into a general-use personal computer that can execute the various functions by installing various programs.

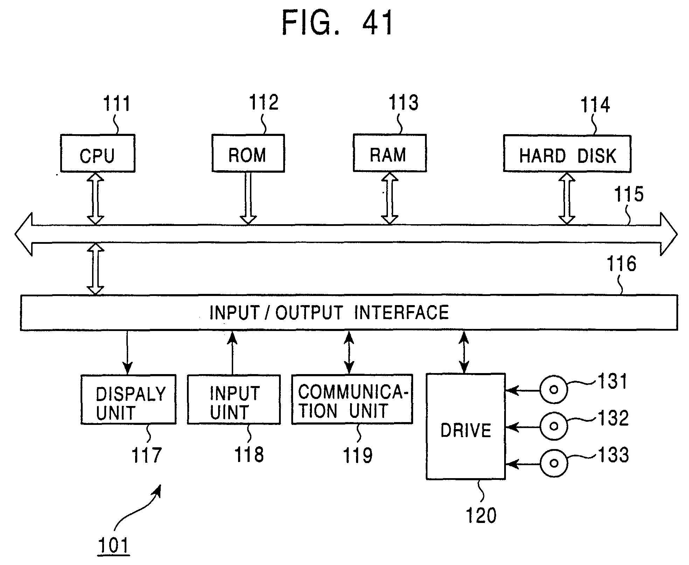

As shown in Fig. 41, a general-use personal computer 101 has, for example, a built-in central processing unit (CPU) 111. An input/output interface 116 is connected to the CPU 111 via a bus 115. In response to an instruction provided by a user from an input unit 118, such as a keyboard, a mouse, etc., via the input/output interface 116, the CPU 111 reads a program implementing the above-described operations from a recording medium, such as a read only memory (ROM) 112 or a hard disk 114, or a recording medium loaded into a drive 120, such as a magnetic disk 131, an optical disc 132, or a magneto-optical disk 133. The CPU 111 then installs the read program into a random access memory (RAM) 113 and executes it. The program installed in the hard disk 114 may be a program stored in a recording medium and distributed to the user, or may be a program transferred through a satellite or a network and received by a communication unit 119, and then installed in the hard disk 114.

After processing the program, the CPU 111 outputs an image signal to a display unit 117, such as a liquid crystal display (LCD) or a cathode ray tube (CRT), via the input/output interface 116.

As is seen from the foregoing description, the information processing apparatus, the information processing method, and the recording medium of the present invention offer the following advantages.

The time at which the target is to be used is converted into the first reference time used by the target according to the information concerning the first reference time. It is thus possible to precisely control the target even when the target uses the reference time different from that used by the information processing apparatus.

The information concerning the second reference time is stored, and is output to an external information processing apparatus in response to a request from the information processing apparatus. This enables the external information processing apparatus to manage events at a correct time.

The validities of the stored events are designated. Accordingly, it is possible to collectively control a plurality of information processing apparatuses connected to a network by a single information processing apparatus while maintaining the information of the individual events. Even when processing for the events is temporarily changed, temporarily processing can be executed while maintaining detailed information of the events in the individual information processing apparatuses.

Since the end time or the standby time of the event is designated by relative time, it can be input into each information processing apparatus as a fixed value, thereby facilitating the creation of the application. Even when the end time or the standby time is postponed or advanced, no change is required.

The connection information required for transmitting and receiving data via a network is stored for each event, thereby speedily determining contention in the network.

The event is executed according to any one of the standby, start, end, suspend, and restart stages. Thus, the event can be managed according to each stage, thereby enhancing easy access to the execution of the event.

The user information is stored for each event. It is thus easy to manage and search a plurality of events.

An information processing program according to an embodiment of the invention can be provided on a carrier medium such as, for example any suitable storage, recording or transmission medium.

## Claims

1. An information processing apparatus which is operated based on a second reference time and uses a target operated based on a first reference time via a network, said information processing apparatus comprising:
first acquisition means for acquiring a time represented by said second reference time at which said target is to be used;
second acquisition means for acquiring information concerning said first reference time from said target; and
conversion means for converting the time represented by said second reference time acquired by said first acquisition means into a time represented by said first reference time at which said target is to be used according to the information concerning said first reference time acquired by said second acquisition means.

2. An information processing apparatus according to claim 1, further comprising registration means for registering the time converted by said conversion means in said target.

3. An information processing apparatus according to claim 1, wherein said second acquisition means acquires, as the information concerning said first reference time, information concerning a difference of said first reference time from a third reference time which is shared between said information processing apparatus and said target.

4. An information processing apparatus according to claim 3, wherein said second acquisition means further acquires information concerning a polarity of said third reference time as the information concerning said first reference time.

5. An information processing apparatus according to claim 1, wherein said second acquisition means acquires a code representing a country in which said target is located as the information concerning said first reference time.

6. An information processing apparatus according to claim 1, wherein the time at which said target is to be used includes a start time at which the use of said target is started.

7. An information processing method for use in an information processing apparatus which is operated based on a second reference time and uses a target operated based on a first reference time via a network, said information processing method comprising:
a first acquisition step of acquiring a time represented by said second reference time at which said target is to be used;
a second acquisition step of acquiring information concerning said first reference time from said target; and
a conversion step of converting the time represented by said second reference time acquired by processing of said first acquisition step into a time represented by said first reference time at which said target is to be used according to the information concerning said first reference time acquired by processing of said second acquisition step.

8. An information processing program executable by a computer, said information processing program being for use in an information processing apparatus which is operated based on a second reference time and uses a target operated based on a first reference time via a network, said information processing program comprising:
a first acquisition step of acquiring a time represented by said second reference time at which said target is to be used;
a second acquisition step of acquiring information concerning said first reference time from said target; and
a conversion step of converting the time represented by said second reference time acquired by processing of said first acquisition step into a time represented by said first reference time at which said target is to be used according to the information concerning said first reference time acquired by processing of said second acquisition step.

9. An information processing apparatus which is operated based on a second reference time and is used by an external information processing apparatus operated based on a first reference time via a network, said information processing apparatus comprising:
first storage means for storing an event which is started at a predetermined time;
second storage means for storing a start time of the event;
third storage means for storing information concerning said second reference time; and
output means for outputting the information concerning said second reference time stored in said third storage means to said external information processing apparatus in response to a request from said external information processing apparatus.

10. An information processing apparatus according to claim 9, wherein said third storage means stores, as the information concerning said second reference time, information concerning a difference of said second reference time from a third reference time which is shared between said information processing apparatus and said external information processing apparatus.

11. An information processing apparatus according to claim 10, wherein said third storage means further stores information concerning a polarity of said third reference time as the information concerning said second reference time.

12. An information processing apparatus according to claim 9, wherein said third storage means further stores a code representing a country in which said information processing apparatus is located as the information concerning said second reference time.

13. An information processing method for use in an information processing apparatus which is operated based on a second reference time and is used by an external information processing apparatus operated based on a first reference time via a network, said information processing method comprising:
a first storage control step of controlling storage of an event which is started at a predetermined time;
a second storage control step of controlling storage of a start time of the event;
a third storage control step of controlling storage of information concerning said second reference time; and
an output step of outputting the information concerning said second reference time stored by processing of said third storage control step to said external information processing apparatus in response to a request from said external information processing apparatus.

14. An information processing program executable by a computer, said information processing program being for use in an information processing apparatus which is operated based on a second reference time and is used by an external information processing apparatus operated based on a first reference time via a network, said information processing program comprising:
a first storage control step of controlling storage of an event which is started at a predetermined time;
a second storage control step of controlling storage of a start time of the event;
a third storage control step of controlling storage of information concerning said second reference time; and
an output step of outputting the information concerning said second reference time stored by processing of said third storage control step to said external information processing apparatus in response to a request from said external information processing apparatus.

15. An information processing apparatus for transmitting and receiving data via a network, comprising:
storage means for storing events to be processed;
execution means for executing the events stored in said storage means;
time designating means for designating a time at which each of the events is to be executed; and
validity designating means for designating a validity of the events stored in said storage means.

16. An information processing apparatus according to claim 15, wherein said validity designating means designates the validity of all the events stored in said storage means.

17. An information processing apparatus according to claim 15, wherein said validity designating means designates the validities of the individual events stored in said storage means.

18. An information processing method for use in an information processing apparatus for transmitting and receiving data via a network, said information processing method comprising:
a storage control step of controlling storage of events to be processed;
an execution step of executing the events stored by processing of said storage control step;
a time designating step of designating a time at which each of the events is to be executed; and
a validity designating step of designating a validity of the events stored by processing of said storage control step.

19. An information processing program executable by a computer and used in transmitting and receiving data via a network, said information processing program comprising:
a storage control step of controlling storage of events to be processed;
an execution step of executing the events stored by processing of said storage control step;
a time designating step of designating a time at which each of the events is to be executed; and
a validity designating step of designating a validity of the events stored by processing of said storage control step.

20. An information processing apparatus for transmitting and receiving data via a network, comprising:
storage means for storing an event to be processed;
execution means for executing the event stored in said storage means; and
time designating means for designating one of an end time and a standby time of the event by a relative time.

21. An information processing apparatus according to claim 20, wherein said time designating means further designates a valid period of the event stored in said storage means.

22. An information processing apparatus according to claim 20, wherein said time designating means designates one of the end time and the standby time of the event by a relative time calculated from a start time of the event.

23. An information processing method for use in an information processing apparatus for transmitting and receiving data via a network, said information processing method comprising:
a storage control step of controlling storage of an event to be processed;
an execution step of executing the event stored by processing of said storage control step; and
a time designating step of designating one of an end time and a standby time of the event by a relative time.

24. An information processing program executable by a computer and used in transmitting and receiving data via a network, said information processing program comprising:
a storage control step of controlling storage of an event to be processed;
an execution step of executing the event stored by processing of said storage control step; and
a time designating step of designating one of an end time and a standby time of the event by a relative time.

25. An information processing apparatus for transmitting and receiving data via a network, comprising:
event storage means for storing events to be processed;
execution means for executing the events stored in said event storage means;
time designating means for designating a time at which each of the events is to be executed; and
connection information storage means for storing connection information of each of the events required for transmitting and receiving data via said network.

26. An information processing method for use in an information processing apparatus for transmitting and receiving data via a network, said information processing method comprising:
an event storage control step of controlling storage of events to be processed;
an execution step of executing the events stored by processing of said event storage control step;
a time designating step of designating a time at which each of the events are to be executed; and
a connection information storage step of storing connection information of each of the events required for transmitting and receiving data via said network.

27. An information processing program and used in transmitting and receiving data via a network, said information processing program comprising:
an event storage control step of controlling storage of events to be processed;
an execution step of executing the events stored by processing of said event storage control step;
a time designating step of designating a time at which each of the events is to be executed; and
a connection information storage step of storing connection information of each of the events required for transmitting and receiving data via said network.

28. An information processing apparatus for transmitting and receiving data via a network, comprising:
event storage means for storing an event to be processed;
time designating means for designating a time at which the event is to be executed; and
execution means for executing the event stored in said storage means according to any one of standby, start, end, suspend, and restart stages of the event.

29. An information processing apparatus according to claim 28, further comprising stage-validity designating means for designating a validity of each of the stages.

30. An information processing method for use in an information processing apparatus for transmitting and receiving data via a network, said information processing method comprising:
an event storage control step of controlling storage of an event to be processed;
a time designating step of designating a time at which the event is to be executed; and
an execution step of executing the event stored by processing of said event storage control step according to any one of standby, start, end, suspend, and restart stages of the event.

31. An information processing program executable by a computer and used in transmitting and receiving data via a network, said information processing program comprising:
an event storage control step of controlling storage of an event to be processed;
a time designating step of designating a time at which the event is to be executed; and
an execution step of executing the event stored by processing of said event storage control step according to any one of standby, start, end, suspend, and restart stages of the event.

32. An information processing apparatus for transmitting and receiving data via a network, comprising:
event storage means for storing events to be processed;
time designating means for designating a time at which each of the events is to be executed;
execution means for executing the events stored in said event storage means; and
user information storage means for storing user information of each of the events.

33. An information processing method for use in an information processing apparatus for transmitting and receiving data via a network, said information processing method comprising:
an event storage control step of controlling storage of events to be processed;
a time designating step of designating a time at which each of the events is to be executed;
an execution step of executing the events stored by processing of said event storage control step; and
a user information storage step of storing user information of each of the events.

34. An information processing program executable by a computer and used in transmitting and receiving data via a network, said information processing program comprising:
an event storage control step of controlling storage of events to be processed;
a time designating step of designating a time at which each of the events is to be executed;
an execution step of executing the events stored by processing of said event storage control step; and
a user information storage step of storing user information of each of the events.

35. An information processing program according to any one of claims 8, 14, 19, 24, 27, 31 and 34 on a carrier medium, for example a storage, recording or transmission medium.
